# EUROPEAN PATENT APPLICATION

(11) **EP 4 546 728 A1**
(43) Date of publication of application: **30.04.2025**
(21) Application number: 22947453.1
(22) Date of filing: 24.06.2022
(51) Int. Cl.: H04L 27/00

(54) **MULTI-LINK RECONFIGURATION METHODS AND APPARATUSES, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); HUANG, Lei, Singapore 049483 (SG); LUO, Chaoming, Dongguan, Guangdong 523860 (CN)
(74) Representative: Ipside
(86) International application number: PCT/CN2022/101335
(87) International publication number: WO 2023/245687

(57) **Abstract**

A method and apparatus for multi-link reconfiguration, and a communication device are provided. The method includes the following. If a first multi-link device (MLD) and a second MLD have completed multi-link setup and set up at least one setup link, the first MLD determines whether a link capability of at least one requested link is compatible with a link common capability and/or whether an operational requirement of at least one first affiliated station (STA) is compatible with a link common operation, where the at least one first affiliated STA is an affiliated STA of the first MLD associated with the at least one requested link, the link common capability refers to a capability common to the at least one setup link, and the link common operation refers to an operation common to the at least one setup link.

## Description

### TECHNICAL FIELD

Embodiments of the disclosure relate to the field of mobile communication technology, and more particularly, to a method and apparatus for multi-link reconfiguration, and a communication device.

### BACKGROUND

One or more links can be set up between a non-access point multi-link device (non-AP MLD) and an AP MLD. After one or more links are set up between the non-AP MLD and the AP MLD, the AP MLD can add one or more affiliated APs or remove one or more affiliated APs; likewise, the non-AP MLD can add one or more affiliated stations (STA) or remove one or more affiliated STAs. In this case, multi-link reconfiguration between the non-AP MLD and the AP MLD is required, and how to perform multi-link reconfiguration needs to be improved.

### SUMMARY

Embodiments of the disclosure provide a method and apparatus for multi-link reconfiguration, a communication device, a chip, a computer-readable storage medium, a computer program product, and a computer program.

In a first aspect, a method for multi-link reconfiguration is provided in embodiments of the disclosure. The method includes the following. If a first multi-link device (MLD) and a second MLD have completed multi-link setup and set up at least one setup link, the first MLD determines whether a link capability of at least one requested link is compatible with a link common capability and/or whether an operational requirement of at least one first affiliated station (STA) is compatible with a link common operation, where the at least one first affiliated STA is an affiliated STA of the first MLD associated with the at least one requested link, the link common capability refers to a capability common to the at least one setup link, and the link common operation refers to an operation common to the at least one setup link.

In a second aspect, a method for multi-link reconfiguration is provided in embodiments of the disclosure. The method includes the following. A second MLD receives a first request frame transmitted by a first MLD, and/or transmits a first response frame to the first MLD, where the first request frame is used for requesting to add at least one requested link in multi-link reconfiguration, and the first response frame is used for adding the at least one requested link in multi-link reconfiguration.

In a third aspect, an apparatus for multi-link reconfiguration is provided in embodiments of the disclosure. The apparatus is applied to a first MLD. The apparatus includes a first determining unit. The first determining unit is configured for the first MLD to determine whether a link capability of at least one requested link is compatible with a link common capability and/or whether an operational requirement of at least one first STA is compatible with a link common operation, when the first MLD and a second MLD have completed multi-link setup and set up at least one setup link, where the at least one first affiliated STA is an affiliated STA of the first MLD associated with the at least one requested link, the link common capability refers to a capability common to the at least one setup link, and the link common operation refers to an operation common to the at least one setup link.

In a fourth aspect, an apparatus for multi-link reconfiguration is provided in embodiments of the disclosure. The apparatus is applied to a second MLD. The apparatus includes a second transceiver unit. The second transceiver unit is configured to receive a first request frame transmitted by a first MLD and/or transmit a first response frame to the first MLD, where the first request frame is used for requesting to add at least one requested link in multi-link reconfiguration, and the first response frame is used for adding the at least one requested link in multi-link reconfiguration.

A communication device provided in embodiments of the disclosure includes a processor and a memory. The memory is configured to store computer programs. The processor is configured to invoke and execute the computer programs stored in the memory, to implement the method for multi-link reconfiguration described above.

A chip provided in embodiments of the disclosure is configured to implement the method for multi-link reconfiguration described above. Specifically, the chip includes a processor. The processor is configured to invoke and execute computer programs from a memory, to cause a device equipped with the chip to implement the method for multi-link reconfiguration described above.

A computer-readable storage medium provided in embodiments of the disclosure is configured to store computer programs which are operable with a computer to implement the method for multi-link reconfiguration described above.

A computer program product provided in embodiments of the disclosure includes computer program instructions which are operable with a computer to implement the method for multi-link reconfiguration described above.

A computer program provided in embodiments of the disclosure, when executed by a computer, is operable with the computer to implement the method for multi-link reconfiguration described above.

In the method for multi-link reconfiguration provided in embodiments of the disclosure, on condition that at least one setup link has been set up between the first MLD and the second MLD, by performing compatibility authentication for the at least one requested link which is requested for addition, it is possible to ensure compatibility between a new link and the setup link in subsequent multi-link reconfiguration, so as to realize smooth setup of the new link, and in this way, a mechanism for multi-link reconfiguration can be improved.

### BRIEF DESCRIPTION OF THE DRAWINGS

The accompanying drawings described herein are intended for further understanding of the disclosure and constitute part of the disclosure. Exemplary embodiments of the disclosure as well as elaborations thereof are intended for explaining, rather than limiting, the disclosure. In the accompanying drawings:
FIG. 1 is an architectural diagram of a communication system to which embodiments of the disclosure are applied.
FIG. 2-1 is a schematic diagram illustrating an application scenario according to embodiments of the disclosure.
FIG. 2-2 is a schematic diagram illustrating an application scenario according to embodiments of the disclosure.
FIG. 3-1 is a schematic diagram illustrating a format of a per-station (STA) control field transmitted by a non-access point multi-link device (non-AP MLD) according to embodiments of the disclosure.
FIG. 3-2 is a schematic diagram illustrating a format of a per-STA control field transmitted by an AP MLD according to embodiments of the disclosure.
FIG. 4 is schematic flowchart I of a method for multi-link reconfiguration provided in embodiments of the disclosure.
FIG. 5 is schematic flowchart II of a method for multi-link reconfiguration provided in embodiments of the disclosure.
FIG. 6 is schematic flowchart III of a method for multi-link reconfiguration provided in embodiments of the disclosure.
FIG. 7 is schematic flowchart IV of a method for multi-link reconfiguration provided in embodiments of the disclosure.
FIG. 8 is schematic flowchart V of a method for multi-link reconfiguration provided in embodiments of the disclosure.
FIG. 9 is schematic interaction diagram I of a method for multi-link reconfiguration provided in embodiments of the disclosure.
FIG. 10 is schematic interaction diagram II of a method for multi-link reconfiguration provided in embodiments of the disclosure.
FIG. 11 is schematic interaction diagram I illustrating robust security network association (RSNA) authentication provided in embodiments of the disclosure.
FIG. 12 is schematic interaction diagram II illustrating RSNA authentication provided in embodiments of the disclosure.
FIG. 13 is a schematic structural diagram of an apparatus 1300 for multi-link reconfiguration provided in embodiments of the disclosure.
FIG. 14 is a schematic structural diagram of an apparatus 1400 for multi-link reconfiguration provided in embodiments of the disclosure.
FIG. 15 is a schematic structural diagram of a communication device provided in embodiments of the disclosure.
FIG. 16 is a schematic structural diagram of a chip according to embodiments of the disclosure.
FIG. 17 is a schematic block diagram of a communication system provided in embodiments of the disclosure.

### DETAILED DESCRIPTION

The following will describe technical solutions of embodiments of the disclosure with reference to the accompanying drawings of embodiments of the disclosure. Apparently, embodiments described herein are merely some embodiments, rather than all embodiments, of the disclosure. Based on embodiments of the disclosure, all other embodiments obtained by those of ordinary skill in the art without creative effort shall fall within the protection scope of the disclosure.

The technical solutions of embodiments of the disclosure can be applied to various communication systems, for example, wireless local area network (WLAN), wireless fidelity (Wi-Fi), or other communication systems. A frequency band supported by WLAN can include, but is not limited to, a low frequency band (2.4 Giga Hertz (GHz), 5 GHz, and 6 GHz), and a high frequency band (60 GHz).

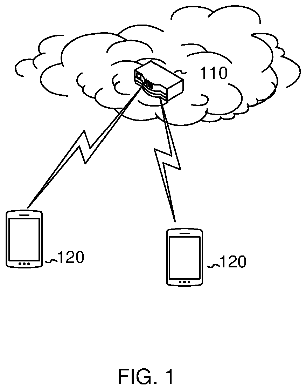

FIG. 1 illustrates an example of a communication system architecture to which embodiments of the disclosure are applied.

As illustrated in FIG. 1, the communication system 100 can include an access point (AP) 110, and a station (STA) 120 for accessing a network via the AP 110. In some scenarios, the AP 110 can be referred to as an AP STA, that is, the AP 110 is also a type of STA in some sense. In some scenarios, the STA 120 can be referred to as a non-AP STA. In some scenarios, the STA 120 can include an AP STA and a non-AP STA. Communication in the communication system 100 can include: communication between the AP 110 and the STA 120, communication between the STAs 120, or communication between the STA 120 and a peer STA, where the peer STA can refer to a device for communicating with a peer of the STA 120, for example, the peer STA can be an AP or a non-AP STA.

The AP 110 can be used as a bridge for connecting a wired network and a wireless network. The AP 110 is mainly used for connecting various wireless network clients together and then connecting the wireless network to an Ethernet. The AP 110 can be a terminal device (for example, a mobile phone) having a Wi-Fi chip or a network device (for example, a router).

It should be noted that, a role of the STA 120 in the communication system is not absolute, that is, the role of the STA 120 in the communication system can be switched between the AP and the STA. For example, in some scenarios, if a mobile phone is connected to a router, the mobile phone is an STA. If the mobile phone is a hotspot for another mobile phone, the mobile phone serves as an AP.

In some embodiments, the AP 110 and the STA 120 can be devices applied to vehicle to everything (V2X); internet of things (IoT) nodes, sensors, etc. in loT; smart cameras, smart remote controls, smart water meters and electricity meters, etc. in smart home; sensors in smart city, etc.

In some embodiments, the AP 110 can be a device that supports 802.11be standards. The AP 110 can also be a device that supports various current and future 802.11 WLAN standards, such as 802.11ax, 802.11ac, 802.11n, 802.11g, 802.11b, 802.11a, etc. In some embodiments, the STA 120 can support 802.11be standards. The STA can also support various current and future 802.11 WLAN standards, such as 802.11ax, 802.11ac, 802.11n, 802.11g, 802.11b, 802.11a, etc.

In some embodiments, the AP 110 and/or the STA 120 can be deployed on land, which includes indoor or outdoor, handheld, wearable, or in-vehicle. The AP 110 and/or the STA 120 can also be deployed on water (such as ships). The AP 110 and/or the STA 120 can also be deployed in the air (such as airplanes, balloons, satellites, etc.).

In some embodiments, the STA 120 can be a device supporting WLAN/Wi-Fi technology, such as a mobile phone, a tablet (pad), a computer with wireless transceiver functions, a virtual reality (VR) device, an augmented reality (AR) device, a wireless device in industrial control, a set-top box, a wireless device in self-driving, an in-vehicle communication device, a wireless device in remote medicine, a wireless device in smart grid, a wireless device in transportation safety, a wireless device in smart city or a wireless device in smart home, an in-vehicle communication device, a wireless communication chip/application specific integrated circuit (ASIC)/system-on-chip (SoC), etc.

Exemplarily, the STA 120 can also be a wearable device. The wearable device can also be called a wearable smart device, which is a generic term of wearable devices obtained through intelligent design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or some of functions of a smart phone, and for example, various types of smart bands and smart jewelries for physical monitoring, of which each is dedicated to application functions of a certain type and required to be used together with other devices such as a smart phone.

It should be understood that, FIG. 1 only illustrates an example of the disclosure and shall not be construed as limitation on the disclosure. For example, FIG. 1 only exemplarily illustrates one AP and two STAs. In some embodiments, the communication system 100 can include multiple APs and other quantities of STAs, and embodiments of the disclosure are not limited in this regard.

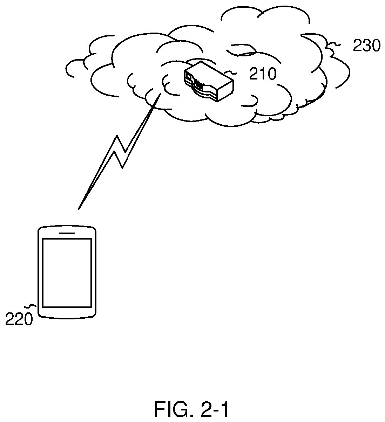

FIG. 2-1 is a schematic diagram illustrating an application scenario according to embodiments of the disclosure.

As illustrated in FIG. 2-1, a communication system 200 can include an AP multi-link device (MLD) 210 and a non-AP MLD 220. The AP MLD 210 is an electronic device capable of forming a WLAN 230 with a transmitted signal, such as a router or a mobile phone having hotspot functions. The non-AP MLD 220 is an electronic device capable of accessing the WLAN 230 formed by the AP MLD 210, such as a mobile phone, a smart washing machine, an air conditioner, and an electronic lock. The non-AP MLD 220 communicates with the AP MLD 210 over the WLAN 230, where the AP MLD 210 can be a soft AP MLD, a mobile AP MLD, etc.

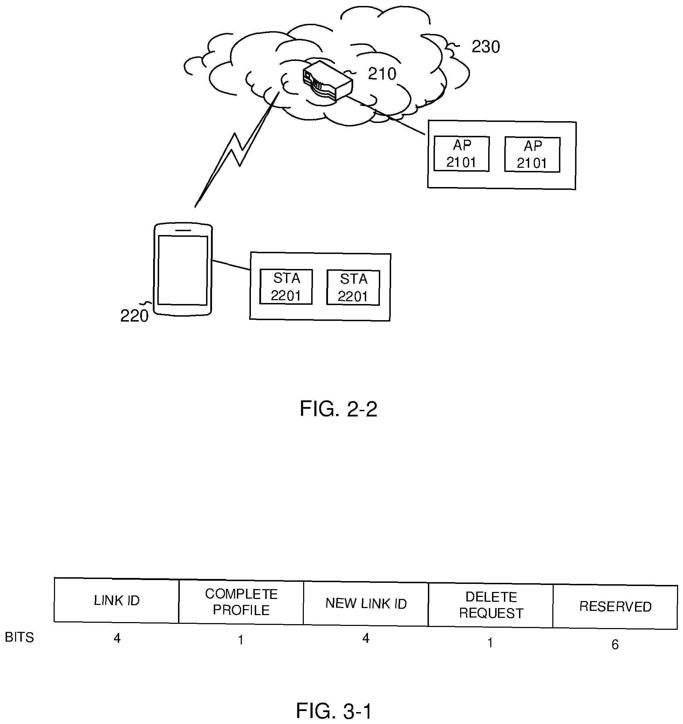

As illustrated in FIG. 2-2, in the communication system illustrated in FIG. 2-1, the AP MLD 210 has at least two APs 2101 affiliated, and the non-AP MLD 220 has at least two STAs 2201 affiliated, where each AP is connected to different STAs of the non-AP MLD 220 over different links. An AP affiliated with the AP MLD can also be referred to as an affiliated AP of the AP MLD, and an STA affiliated with the non-AP MLD can also be referred to as an affiliated STA of the non-AP MLD.

In embodiments of the disclosure, the AP MLD 210 and the non-AP MLD 220 can be terminal devices. The terminal device can refer to an access terminal, a user equipment (UE), a subscriber unit, a subscriber station, a mobile station, a remote station, a remote terminal, a mobile device, a user terminal, a terminal, a wireless communication device, a user agent, or a user device. The access terminal can be a cellular radio telephone, a cordless telephone, a session initiation protocol (SIP) telephone, a wireless local loop (WLL) station, a personal digital assistant (PDA), a device with wireless communication functions such as a handheld device, a computing device, other processing devices coupled with a wireless modem, an in-vehicle device, and a wearable device, a terminal device in a 5^{th} generation (5G) network, a terminal device in the future evolved public land mobile network (PLMN), etc.

The communication system 200 illustrated in FIG. 2-1 can further include a network device. The network device can be an access-network device for communicating with the terminal device. The access-network device can provide a communication coverage for a specific geographical area and communicate with terminals in the coverage area.

FIG. 2-1 exemplarily illustrates one AP MLD and one non-AP MLD. Optionally, the wireless communication system 200 can include multiple non-AP MLDs accessing the WLAN 230, which is not limited in embodiments of the disclosure.

It should be noted that, FIG. 1, FIG. 2-1, and FIG. 2-2 only exemplarily illustrate the system to which the disclosure can be applied. The method illustrated in embodiments of the disclosure can also be applied to other systems. In addition, the terms "system" and "network" herein are usually used interchangeably throughout this disclosure. The term "and/or" herein only describes an association between associated objects, which means that there can be three relationships. For example, *A* and/or B can mean *A* alone, both *A* and B exist, and *B* alone. In addition, the character "/" herein generally indicates that the associated objects are in an "or" relationship. It should also be understood that, "indication" referred to in embodiments of the disclosure can be a direct indication, or can be an indirect indication, or can mean that there is an association. For example, *A* indicates *B* can mean that A directly indicates B, for instance, B can be obtained according to *A*; can mean that *A* indirectly indicates B, for instance, *A* indicates C, and B can be obtained according to C; or can mean that that there is an association between *A* and B. It should also be understood that, the term "correspondence" referred to in embodiments of the disclosure can mean that there is a direct or indirect correspondence between the two, or can mean that there is an association between the two, or can mean a relationship of indicating and indicated or configuring and configured, etc. It should also be understood that, the "pre-defined" or "pre-defined rule" referred to in embodiments of the disclosure can be implemented by pre-storing a corresponding code or table in a device (for example, including the terminal device and the network device) or in other manners that can be used for indicating related information, and the disclosure is not limited in this regard. For example, the "pre-defined" can mean defined in a protocol. It should also be understood that, in embodiments of the disclosure, the "protocol" can refer to a communication standard protocol, and can include, for example, a long-term evolution (LTE) protocol, a new radio (NR) protocol, and a related protocol applied to a future communication system, which is not limited in the disclosure.

In order for better understanding of technical solutions of embodiments of the disclosure, the related art of embodiments of the disclosure will be described in detail below. The following related art as an optional scheme can be arbitrarily combined with the technical solutions of embodiments of the disclosure, which shall all belong to the protection scope of embodiments of the disclosure.

A multi-link reconfiguration mechanism defined in the related art refers to a set of procedures for adding one or more affiliated APs to an AP MLD or removing one or more affiliated APs from the AP MLD.

With regard to adding the affiliated AP, the AP MLD can add one or more affiliated APs at any time. Specifically, the AP MLD announces a new affiliated AP by changing a maximum number of simultaneous links field of an MLD capabilities field in a basic multi-link element in a beacon frame and/or probe response frame and by including a target beacon transmission time (TBTT) information field for the new affiliated AP in a reduced neighbor report element in the beacon frame and/or probe response frame.

With regard to removing the affiliated AP, the AP MLD can remove one or more of its affiliated APs. The AP MLD announces removal of any affiliated AP through a reconfiguration multi-link element transmitted in all beacon frames and/or probe response frames of all the affiliated APs, until the affiliated AP has been removed. For each affiliated AP that the AP MLD intends to remove, the reconfiguration multi-link element includes a per-STA profile subelement, and the subfields of the per-STA control field are set as follows: a link identity (ID) subfield identifies the AP, a complete profile subfield is set to 0, a delete timer present subfield is set to 1, and a delete timer subfield is set to the number of TBTTs of the affiliated AP before the affiliated AP is removed. An initial value of the delete timer subfield shall be longer than an MLD max idle period. The per-STA profile subelement shall not include an STA profile field. At a TBTT indicated by the delete timer subfield in a transmitted reconfiguration multi-link element, an associated non-AP MLD considers that a link corresponding to the removed AP is nonexistent, and a station management entity (SME) of an affiliated STA associated with the removed affiliated AP shall delete any information maintained for the link.

In the related art, a reconfiguration variant multi-link element and a link reconfiguration request/response action frame based on the element are designed. The characteristics of the reconfiguration variant multi-link element are mainly as follows: 1) a common information field is not present; 2) a link information field is present, and the link information field contains zero or more subelements, where optional subelements are as illustrated in table 1.

**Table 1**

| Subelement ID | Name | Extensible |
|---|---|---|
| 0 | Per-STA profile subelement | Yes |
| 1-220 | Reserved | |
| 221 | Vendor specific | Vendor defined |
| 222-255 | Reserved | |

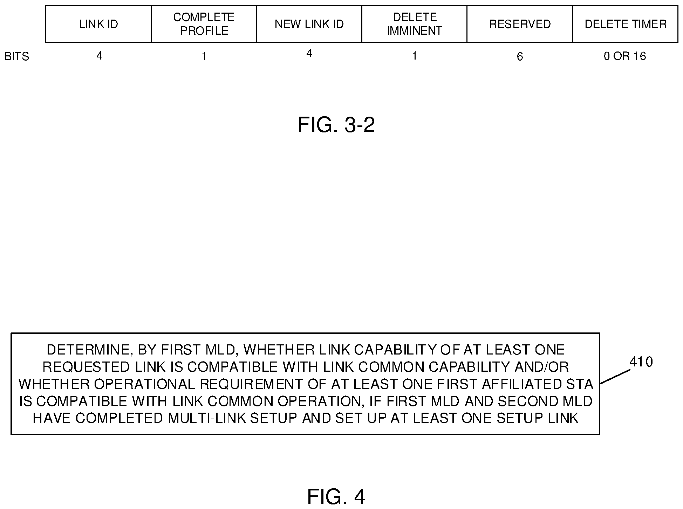

The per-STA profile subelement in table 1 includes a per-STA control field. A format of a per-STA control field transmitted by the non-AP MLD is illustrated in FIG. 3-1, which includes a link ID subfield, a complete profile subfield, a new link ID subfield, and a delete request subfield. The new link ID subfield indicates an ID of a link corresponding to a new AP that is requested for connection to. Specifically, if the new link ID subfield is set to 15, it indicates that no request to create a new link is made. If the delete request subfield is set to 1, it means requesting to delete a link indicated by the link ID subfield. A format of a per-STA control field transmitted by the AP MLD is illustrated in FIG. 3-2, which includes a link ID subfield, a complete profile subfield, a new link ID subfield, a delete imminent subfield, and a delete timer subfield.

The definition of multi-link reconfiguration in the foregoing related art is limited to the procedure of adding one or more affiliated APs to an AP MLD or removing one or more affiliated APs from an AP MLD. In a practical application scenario, after multi-link setup between a non-AP MLD and an AP MLD is performed successfully so that the non-AP MLD is associated with the AP MLD, if the AP MLD has performed multi-link reconfiguration and added an affiliated AP, information of the new affiliated AP is contained in a beacon frame and/or a probe response frame. When the non-AP MLD intends to set up a link with the new affiliated AP, if the non-AP MLD firstly disassociates the AP MLD and tears down a setup link, and then performs multi-link setup with the AP MLD to set up a link corresponding to the new affiliated AP, it will cause interruption of operation of the non-AP MLD on the previously setup link and failure to realize smooth setup of the new link. If the non-AP MLD directly performs multi-link setup with the AP MLD without disassociating the AP MLD, it will cause repeated association between the non-AP MLD and the AP MLD, and such operation cannot be supported by a rule for multi-link setup and a multi-link element defined in the related art. In addition, in the related art, the problem of how to coordinate a multi-link common parameter and a link-specific parameter between a setup link and a reconfigured link is not yet solved, for example, how to coordinate MLD capability information affected by a new link during setup of the new link, and how to coordinate parameter information of other links affected by the new link.

Therefore, with regard to multi-link reconfiguration, a mechanism for link addition on condition that a non-AP MLD is already associated with an AP MLD shall be defined, and therefore, the following technical solutions of embodiments of the disclosure are provided. In technical solutions of embodiments of the disclosure, a mechanism for multi-link addition on condition that a non-AP MLD is already associated with an AP MLD and multi-link setup is already performed successfully, as well as a mechanism for robust security network association (RSNA) authentication after completion of setup of a new link, are defined.

It should be noted that, although the foregoing elaborations are made by taking a non-AP MLD and an AP MLD as objects, the technical solutions of embodiments of the disclosure are not limited thereto. A first MLD in embodiments of the disclosure can be a non-AP MLD, and a second MLD in embodiments of the disclosure can be an AP MLD. Alternatively, the first MLD in embodiments of the disclosure can be an MLD, and the second MLD in embodiments of the disclosure can be a peer MLD.

In order to facilitate understanding of the technical solutions of embodiments of the disclosure, the technical solutions of the disclosure will be described in detail below with reference to embodiments. The foregoing related art as an optional scheme can be arbitrarily combined with the technical solutions of embodiments of the disclosure, which shall all belong to the protection scope of embodiments of the disclosure. Embodiments of the disclosure include at least some of the following content.

FIG. 4 is schematic flowchart I of an optional method for multi-link reconfiguration provided in embodiments of the disclosure. As illustrated in FIG. 4, the method for multi-link reconfiguration includes the following steps.

Step 410, if a first MLD and a second MLD have completed multi-link setup and set up at least one setup link, the first MLD determines whether a link capability of at least one requested link is compatible with a link common capability and/or whether an operational requirement of at least one first affiliated STA is compatible with a link common operation.

The at least one first affiliated STA is an affiliated STA of the first MLD associated with the at least one requested link. The link common capability refers to a capability common to the at least one setup link. The link common operation refers to an operation common to the at least one setup link.

In embodiments of the disclosure, "the first MLD and the second MLD have completed multi-link setup" can also mean the second MLD is already associated with the first MLD. That is, before step 410, at least one setup link is already set up between the first MLD and the second MLD.

In the scenario where the first MLD and the second MLD have completed multi-link setup (or the second MLD is already associated with the first MLD), if there is an affiliated AP of the first MLD for which no link is set up, and the affiliated AP for which no link is set up requests to set up a link, then the first MLD can perform compatibility authentication on a related capability and/or an operational requirement of each of at least one link requested for setup, so as to coordinate a multi-link common parameter and a link-specific parameter between the setup link and the link requested for setup in multi-link addition.

It should be noted that, the link requested for setup can also be referred to as a requested link, and an affiliated STA associated with the requested link can be referred to as the first affiliated STA. The requested link can be one or more links, which is not limited in embodiments of the disclosure.

In embodiments of the disclosure, compatibility authentication can include determining whether the link capability of the at least one requested link is compatible with the link common capability and/or whether the operational requirement of the at least one first affiliated STA is compatible with the link common operation.

That is, before multi-link reconfiguration, the first MLD can authenticate whether each of the at least one requested link is compatible with a common capability of the setup link and/or whether the operational requirement of the first affiliated STA corresponding to the at least one requested link is compatible with a common operation of the setup link, so as to determine whether to perform multi-link setup for the at least one requested link which is requested for setup.

It should be noted that, the first MLD can authenticate only whether the link capability of the at least one requested link is compatible with the link common capability of the setup link. Alternatively, the first MLD can authenticate only whether the operational requirement of the at least one first affiliated STA associated with the at least one requested link is compatible with the link common operation. Alternatively, the first MLD can authenticate both whether the link capability of the at least one requested link is compatible with the link common capability and whether the first affiliated STA associated with the at least one requested link is compatible with the link common operation. The manner for authentication herein can be determined according to actual requirements, which is not limited in embodiments of the disclosure.

Optionally, the link common capability includes at least one of: a robust security network (RSN) capability common to the at least one setup link, a robust security network element (RSNE) capability common to the at least one setup link, an extended RSNE capability common to the at least one setup link, or an RSN extended element capability common to the at least one setup link.

Optionally, the link common operation is indicated by at least one of: an authentication and key management (AKM) suite selector common to the at least one setup link, or a pairwise cipher suite common to the at least one setup link.

Optionally, whether the link capability of the at least one requested link is compatible with the link common capability and/or whether the operational requirement of the at least one first affiliated STA is compatible with the link common operation can be determined by the first MLD in step 410 as follows. The first MLD determines whether the at least one requested link supports the link common capability and/or whether the at least one affiliated STA supports the link common operation.

It can be understood that, the first MLD can determine the link common capability and/or the link common operation of the at least one setup link. Exemplarily, the first MLD determines the link common capability of the at least one setup link according to obtained common capability information of the at least one setup link, and determines the link common operation of the at least one setup link according to an obtained common operational parameter of the at least one setup link. It should be noted that, the common capability information and/or the common operational parameter of the at least one setup link can be obtained when the first MLD sets up the at least one setup link with the second MLD, or requested from an affiliated STA associated with the at least one setup link, which is not limited in embodiments of the disclosure.

In addition, the first MLD can also determine the link capability and/or the operational requirement of the at least one requested link which is requested for addition, and then for each requested link, the first MLD can authenticate compatibility of the requested link according to a link capability and/or an operational requirement of the requested link. Specifically, the first MLD can determine whether the link capability of each requested link supports the link common capability of the at least one setup link and/or whether the operational requirement of each requested link supports the link common operation of the at least one setup link.

It should be noted that, the link capability and/or the operational requirement of the at least one requested link which is requested for addition can be determined by the first MLD according to information announced by the second MLD, or can be determined by the first MLD according to an actual attribute of each requested link, which is not limited in embodiments of the disclosure.

Exemplarily, the first MLD can authenticate whether an AKM suite selector and/or a pairwise cipher suite applied to the requested link which is requested for addition is consistent with the AKM suite selector and/or the pairwise cipher suite common to the current setup link. If the two are consistent, the first MLD can determine that the first affiliated STA corresponding to the current requested link is compatible with the link common operation of the at least one setup link. If the two are inconsistent, the first MLD can determine that the first affiliated STA corresponding to the current requested link is incompatible with the link common operation of the at least one setup link.

In the method for multi-link reconfiguration provided in embodiments of the disclosure, on condition that at least one setup link has been set up between the first MLD and the second MLD, by performing compatibility authentication for the at least one requested link which is requested for addition, it is possible to ensure compatibility between a new link and the setup link in subsequent multi-link reconfiguration, so as to realize smooth setup of the new link, and in this way, a mechanism for multi-link reconfiguration can be improved.

Optionally, in embodiments of the disclosure, before the first MLD determines whether the link capability of the at least one requested link is compatible with the link common capability and/or whether the operational requirement of the at least one first affiliated STA is compatible with the link common operation in step 410, the following steps can be performed.

Step 400, the first MLD receives STA information of at least one second affiliated STA transmitted by the second MLD, where the STA information of the at least one second affiliated STA indicates the link capability of the at least one requested link and/or the operational requirement of the at least one first affiliated STA.

The at least one second affiliated STA includes a new affiliated STA of the second MLD and/or an affiliated STA of the second MLD for which no link is set up with the first MLD.

It should be understood that, in step 410, the link capability and/or the operational requirement of the at least one requested link which is requested for addition can be obtained according to the STA information of the at least one second affiliated STA announced by the second MLD.

Optionally, the at least one second affiliated STA can correspond to the at least one first affiliated STA, and accordingly, the at least one second affiliated STA can correspond to the at least one requested link. STA information of each second affiliated STA can carry link capability information of a corresponding link and/or an operational parameter of a corresponding first affiliated STA. The link capability information can indicate a link capability, and the operational parameter can indicate an operational requirement of an affiliated STA.

That is, the first MLD can determine the link capability and/or the operational requirement of each requested link according to related information carried in the STA information of each second affiliated STA.

Optionally, the STA information of the at least one second affiliated STA is carried in a beacon frame or a probe response frame.

That is, the first MLD can receive the beacon frame or the probe response frame carrying the STA information of the second affiliated STA, so as to determine the link capability of the at least one requested link which is requested for setup and/or the operational requirement of the at least one first affiliated STA corresponding to the at least one requested link.

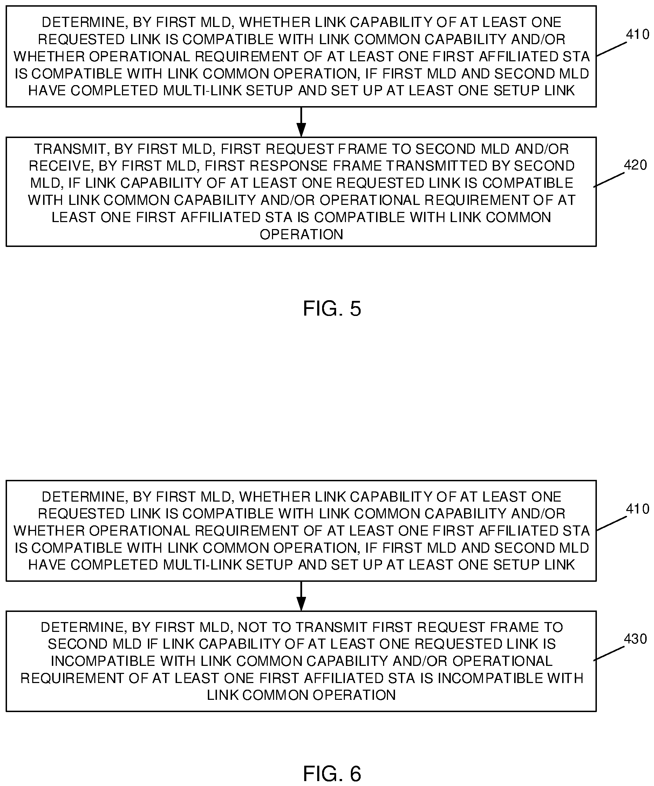

Optionally, as illustrated in FIG. 5, based on step 410, the method for multi-link reconfiguration provided in embodiments of the disclosure can further include the following steps.

Step 420, the first MLD transmits a first request frame to the second MLD and/or receives a first response frame transmitted by the second MLD, if the link capability of the at least one requested link is compatible with the link common capability and/or the operational requirement of the at least one first affiliated STA is compatible with the link common operation.

The first request frame is used for requesting to add the at least one requested link during multi-link reconfiguration, and the first response frame is used for adding the at least one requested link in multi-link reconfiguration.

In embodiments of the disclosure, if the first MLD determines that the link capability of the at least one requested link which is requested for setup is compatible with the link common capability of the setup link and/or the operational requirement of the at least one first affiliated STA is compatible with the link common operation of the setup link, in the scenario where the first MLD has completed multi-link setup with the second MLD, the first MLD performs multi-link setup with the second MLD for at least one requested link which passes compatibility authentication, that is, a requested link that is compatible with the link common capability and/or the link common operation of the setup link.

Specifically, after it is determined that the link capability of the at least one requested link is compatible with the link common capability and/or the operational requirement of the at least one first affiliated STA is compatible with the link common operation, the first MLD can negotiate with the second MLD to set up the at least one requested link through exchange of the first request frame and the first response frame.

In a possible implementation, if the first MLD only needs to authenticate compatibility between the link capability of the at least one requested link and the link common capability of the setup link, after determining that the link capability of the at least one requested link is compatible with the link common capability of the setup link, the first MLD can negotiate with the second MLD to set up the at least one requested link through exchange of the first request frame and the first response frame.

In another possible implementation, if the first MLD only needs to authenticate compatibility between the operational requirement of the at least one first affiliated STA and the link common operation, after determining that the operational requirement of the at least one first affiliated STA associated with the at least one requested link is compatible with the link common operation, the first MLD can negotiate with the second MLD to set up the at least one requested link through exchange of the first request frame and the first response frame.

In another possible implementation, if the first MLD needs to authenticate both compatibility between the link capability of the at least one requested link and the link common capability of the setup link and compatibility between the operational requirement of the at least one first affiliated STA and the link common operation, after determining that the link capability of the at least one requested link is compatible with the link common capability and the at least one first affiliated STA is compatible with the link common operation, the first MLD can negotiate with the second MLD to set up the at least one requested link through exchange of the first request frame and the first response frame.

The first MLD can transmit the first request frame to the second MLD, so as to request to add the at least one requested link. Accordingly, after receiving the first request frame, the second MLD can respond to the first request frame. The second MLD can determine to accept or reject addition of the at least one requested link according to an actual condition of the requested link. The second MLD can accept all of the at least one requested link, or can accept some of the at least one requested link, or can reject all the requested links, which is not limited in embodiments of the disclosure.

Further, the second MLD can feed back the first response frame to the first MLD, and notify, through the first response frame, a setup result of each of the at least one requested link requested by the first MLD.

As can be seen, in embodiments of the disclosure, on condition that at least one setup link has been set up between the first MLD and the second MLD, compatibility authentication is performed on the at least one requested link which is requested for addition, and then multi-link setup is performed for the at least one requested link after the at least one setup link passed compatibility authentication, which can avoid incompatibility after setup and realize smooth setup of a new link.

Optionally, as illustrated in FIG. 6, based on step 410, the method for multi-link reconfiguration provided in embodiments of the disclosure can further include the following steps.

Step 430, the first MLD determines not to transmit the first request frame to the second MLD if the link capability of the at least one requested link is incompatible with the link common capability and/or the operational requirement of the at least one first affiliated STA is incompatible with the link common operation.

It should be understood that, if the first MLD determines that the link capability of the at least one requested link which is requested for setup is incompatible with the link common capability of the setup link and/or the operational requirement of the at least one first affiliated STA is incompatible with the link common operation of the setup link, the first MLD can determine not to perform multi-link setup for the at least one requested link, that is, the first MLD may not transmit to the second MLD the first request frame for requesting to set up the at least one requested link.

In a possible implementation, if the first MLD only needs to authenticate compatibility between the link capability of the at least one requested link and the link common capability of the setup link, the first MLD can determine not to transmit the first request frame to the second MLD after determining that the link capability of the at least one requested link is incompatible with the link common capability of the setup link.

In another possible implementation, if the first MLD only needs to authenticate compatibility between the operational requirement of the at least one first affiliated STA associated with the at least one requested link and the link common operation, the first MLD can determine not to transmit the first request frame to the second MLD after determining that the operational requirement of the at least one first affiliated STA is incompatible with the link common operation.

In another possible implementation, if the first MLD needs to authenticate both compatibility between the link capability of the at least one requested link and the link common capability of the setup link and compatibility between the operational requirement of the at least one first affiliated STA and the link common operation, then the first MLD can determine not to transmit the first request frame to the second MLD after determining that the link capability of the at least one requested link is incompatible with the link common capability or the at least one first affiliated STA is incompatible with the link common operation. Alternatively, the first MLD can determine not to transmit the first request frame to the second MLD if it is determined that the link capability of the at least one requested link is incompatible with the link common capability and the at least one first affiliated STA is not compatible with the link common operation.

As can be seen, in embodiments of the disclosure, on condition that at least one setup link has been set up between the first MLD and the second MLD, compatibility authentication is performed on the at least one requested link which is requested for addition. If the at least one requested link is incompatible with the link common capability and/or the link common operation of the current setup link, the first MLD may not perform multi-link setup for the at least one requested link. As such, it is possible to avoid incompatibility between the related capability and/or operation of a new link and the link common capability and/or the link common operation of the setup link in multi-link reconfiguration, thereby improving the mechanism for multi-link reconfiguration.

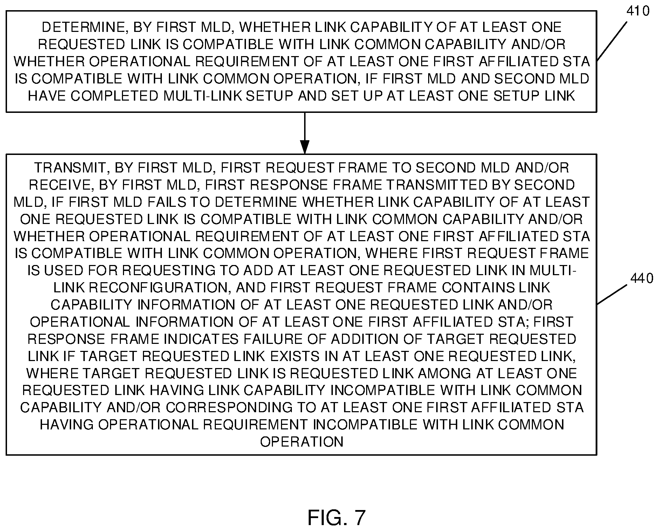

Optionally, as illustrated in FIG. 7, the method for multi-link reconfiguration provided embodiments of the disclosure can further include the following steps.

440, the first MLD transmits a first request frame to the second MLD and/or receives a first response frame transmitted by the second MLD, if the first MLD fails to determine whether the link capability of the at least one requested link is compatible with the link common capability and/or whether the operational requirement of the at least one first affiliated STA is compatible with the link common operation.

The first request frame is used for requesting to add the at least one requested link in multi-link reconfiguration, and the first request frame contains link capability information of the at least one requested link and/or operational information of the at least one first affiliated STA. The first response frame indicates failure of addition of a target requested link if the target requested link exists in the at least one requested link, where the target requested link is a requested link among the at least one requested link having a link capability incompatible with the link common capability and/or corresponding to at least one first affiliated STA having an operational requirement incompatible with the link common operation.

It can be understood that, when adding the at least one requested link of the first MLD, the first MLD may not perform compatibility authentication for the at least one requested link which is requested for setup. Instead, the first MLD can carry, in the first request frame, the link capability information of the at least one requested link which is requested for setup and/or the operational information of the at least one first affiliated STA corresponding to the at least one requested link and transmit to the second MLD, so that the second MLD performs compatibility authentication for the at least one requested link based on the link capability information of at least one requested link and/or the operational information of the at least one first affiliated STA corresponding to the at least one requested link carried in the first request frame.

Optionally, if the first MLD is unable to determine whether the link capability information of the at least one requested link which is requested for setup is compatible with the link common capability and/or whether the operational information of the at least one first affiliated STA corresponding to the at least one requested link is compatible with the link common operation, the first MLD can also carry, in the first request frame, the link capability information of the at least one requested link which is requested for setup and/or the operational information of the at least one first affiliated STA corresponding to the at least one requested link and transmit to the second MLD, so that the second MLD performs compatibility authentication for the at least one requested link based on the link capability information of the at least one requested link and/or the operational information of the at least one first affiliated STA corresponding to the at least one requested link carried in the first request frame.

In embodiments of the disclosure, the second MLD can determine, according to the information carried in the first request frame, whether the link capability of the at least one requested link is compatible with the link common capability and/or whether the operational requirement of the at least one first affiliated STA is compatible with the link common operation. The manner for compatibility authentication is the same as that described in the foregoing embodiments, which is not described again herein for brevity.

Further, after the second MLD completes compatibility authentication for the at least one requested link, the second MLD can determine, according to a compatibility authentication result of each requested link, whether to accept the at least one requested link. Specifically, if the second MLD determines that a link capability of a certain requested link is compatible with the link common capability of the setup link and/or an operational requirement of a first affiliated STA corresponding to the requested link is compatible with the link common operation of the setup link, the second MLD can further determine, according to other factors, whether to accept the requested link and perform multi-link setup for the requested link. If the second MLD determines that the link capability of the requested link is incompatible with the link common capability of the setup link and/or the operational requirement of the first affiliated STA corresponding to the requested link is incompatible with the link common operation of the setup link, the second MLD can reject performing multi-link setup for the requested link, and indicate, through first response frame, that addition of the requested link failed.

That is, the second MLD can directly reject a link having a link capability incompatible with the link common capability and/or corresponding to a first affiliated STA having an operational requirement incompatible with the link common operation. For a requested link having a link capability compatible with the link common capability and/or corresponding to a first affiliated STA having an operational requirement compatible with the link common operation, the second MLD can accept or reject the link, which is not limited herein.

Therefore, if the second MLD determines that, in the at least one requested link, there is the target requested link having the link capability incompatible with the link common capability and/or corresponding to the first affiliated STA having the operational requirement incompatible with the link common operation, the second MLD can indicate, through the first response frame, that addition of the target requested link failed.

As can be seen, in embodiments of the disclosure, on condition that at least one setup link has been set up between the first MLD and the second MLD, the second MLD can perform compatibility authentication for the at least one requested link which is requested by the first MLD for addition according to the related information carried in the first request frame transmitted by the first MLD. If the at least one requested link is incompatible with the link common capability and/or link common operation of the current setup link, the second MLD can reject setup of the at least one requested link, which can avoid incompatibility of a new link in multi-link reconfiguration, thereby improving the mechanism for multi-link reconfiguration.

Optionally, in step 420 and/or step 440, the first MLD can transmit the first request frame to the second MLD and/or receive the first response frame transmitted by the second MLD in one of the following manners.

Manner 1: the first MLD can send the first request frame and/or receive the first response frame on one of the at least one setup link.

Manner 2: the first MLD can send the first request frame and/or receive the first response frame on one of the at least one requested link.

That is, the first MLD and the second MLD can exchange the first request frame and/or the first response frame on a requested link, or exchange the first request frame and/or the first response frame on a setup link, which is not limited in embodiments of the disclosure.

Optionally, the link for transmitting the first request frame can be the same as or different from the link for receiving the first request frame, which is not limited in embodiments of the disclosure.

The first request frame will be described in detail below.

Optionally, the first request frame can include a first multi-link element, where the first multi-link element can be a reconfiguration variant multi-link element. In embodiments of the disclosure, the first multi-link element can also be referred to as a first addition reconfiguration multi-link element, and is used for adding the at least one requested link after completion of multi-link setup.

Optionally, the first multi-link element can include a first common information field and/or a first link information field.

The first common information field indicates information that is common to the at least one requested link and the at least one setup link.

Optionally, the first common information field can contain at least one of: MLD medium access control (MAC) address information of the first MLD, first common capability information, or first common operational information. The first common capability information indicates a capability that is common to the at least one setup link and the at least one requested link. The first common operational information indicates an operation that is common to the at least one setup link and the at least one requested link.

It should be understood that, the first common information in the first multi-link element can include at least one of: the MLD MAC address information of the first MLD, the first common capability information, or the first common operational information. It should be noted that, the first common information may not include a link ID subfield, a basic service set (BSS) parameter change count subfield, and a medium synchronization delay information subfield.

Optionally, the first common capability information can include but is not limited to at least one of: an MLD capability of the first MLD, an enhanced multi-link (EML) capability of the first MLD, an RSN capability, an RSNE capability, an extended RSNE capability, or an RSN extended element capability.

Optionally, the first common operational information can include: an AKM suite selector and/or a pairwise cipher suite common to the at least one setup link and the at least one requested link.

In embodiments of the disclosure, the first link information field can indicate link information of the at least one requested link and/or link information of at least one first setup link, where the at least one first setup link is a link associated with the at least one requested link in the at least one setup link.

That is, the first link information field can indicate the link information of the at least one requested link which is requested for setup and/or link information of at least one setup link associated with the at least one requested link.

Optionally, the setup link associated with the at least one requested link described in embodiments of the disclosure can also refer to a setup link affected by the at least one requested link. If there is a link affected by the at least one requested link in the at least one setup link, the first MLD needs to carry, in the first link information field, link information of another setup link(s) affected by the at least one requested link besides carrying the link information of the at least one requested link.

Exemplarily, a nonsimultaneous transmit and receive (NSTR)-related operation of a setup link may be affected by a new link. If an NSTR-related operation of the at least one setup link is affected by any one requested link which is requested for setup, the first MLD can carry, in the first link information field of the first multi-link element, link information of the setup link whose NSTR-related operation is affected, and transmit to the second MLD through the first request frame carrying the first multi-link element.

It should be understood that, in embodiments of the disclosure, the link information of the at least one requested link and/or the link information of the setup link affected by the requested link is carried in the first link information field of the first multi-link element. As such, the second MLD can know an association between the at least one requested link and the at least one setup link, so as to perform multi-link setup according to the association, thereby improving efficiency of multi-link reconfiguration.

Optionally, if the first multi-link element includes the first link information field, the first link information field can contain STA information of an affiliated STA of the first MLD associated with each of the at least one requested link and/or each of the at least one first setup link.

Optionally, the STA information can be carried in a first per-STA profile subelement.

That is, the first link information field can include a first per-STA profile subelement corresponding to the at least one requested link and/or a first per-STA profile subelement corresponding to the at least one setup link affected by the at least one requested link. The first per-STA profile subelement indicates STA information corresponding to a requested link and/or STA information corresponding to a setup link affected by the requested link.

Optionally, each first per-STA profile subelement includes, but is not limited to, at least one of: a first subelement ID subfield, a first length subfield, a first STA control subfield, a first STA information subfield, or a first STA profile subfield. The first subelement ID subfield indicates a subelement ID of the first per-STA profile subelement. The first length subfield indicates a length of the first per-STA profile subelement. The first STA control subfield indicates STA control information. The first STA information subfield indicates STA information. The first STA profile subfield indicates STA profile information.

A complete profile subfield in a first STA control subfield of each first per-STA profile subelement in the first link information field can be set to 1.

Optionally, the first STA control subfield in the first per-STA profile subelement can include a link ID subfield, where the link ID subfield indicates an ID of a corresponding link for an affiliated STA of the second MLD.

That is, in embodiments of the disclosure, for each of the at least one requested link and/or the setup link affected by the at least one requested link, a link ID subfield in the first STA control subfield in the first per-STA profile subelement of the link can be set to an ID of the corresponding link for the affiliated STA of the second MLD.

Exemplarily, when the first MLD is a non-AP MLD and the second MLD is an AP MLD, if the non-AP MLD requests to set up a link with the AP MLD through the first request frame, a link ID subfield of an STA control subfield in a first per-STA profile subelement of the link in the first request frame can be set to an ID of the link for the affiliated AP of the AP MLD.

Optionally, an ID of each of the at least one requested link for the affiliated STA of the second MLD can be obtained during discovery of the second MLD or during multi-link discovery, which is not limited in embodiments of the disclosure.

Optionally, the first request frame further includes a first transmitter STA information field, where the first transmitter STA information field indicates STA information of an affiliated STA of the first MLD associated with a link for transmitting the first request frame.

It can be understood that, since the first request frame can be transmitted on one of the at least one requested link or transmitted on one of at least one setup link, a frame body of the first request frame can further include the first transmitter STA information field, so as to indicate, through the first transmitter STA information subfield, the STA information of the affiliated STA of the first MLD associated with the link for transmitting the first request frame.

That is, the first request frame can include the first transmitter STA information field and the first multi-link element.

The following will describe in detail a scenario of transmitting the first request frame on a requested link.

In an embodiment of the disclosure, if the first request frame is to be transmitted on a first requested link which is one of the at least one requested link, the first request frame can further contain link capability information and/or an operational parameter of the first requested link, where the link capability information indicates a link capability, and the operational parameter indicates operational information of a corresponding affiliated STA.

It should be understood that, if the first request frame is to be transmitted on one of the at least one requested link (for example, the first requested link), the first request frame can further indicate link capability information and/or an operational parameter of the requested link.

Optionally, the link capability information and/or the operational information of the first requested link is carried in at least one of: the frame body of the first request frame, or the first link information field in the first multi-link element in the first request frame.

It should be understood that, the link capability information and/or the operational information of the first requested link for transmitting the first request frame can be directly carried in the frame body of the first request frame, or can be indicated by the first link information field of the first multi-link element in the first request frame. There is no limitation on the manner for carrying the link capability information and/or the operational information of the first requested link in embodiments of the disclosure.

In a possible implementation, if the requested link requested by the first MLD for setup is only one link, and the first MLD is to transmit the first request frame on the requested link, the first MLD can directly carry the link capability information and/or the operational information of the requested link for transmitting the first request frame in the frame body of the first request frame. Accordingly, in the implementation, if there is no setup link that is affected by the requested link, the first multi-link element in the first request frame may not include the first link information field, and the second MLD can directly obtain, from the first request frame, related information of the current requested link for transmitting the first request frame.

In another possible implementation, if the requested link requested by the first MLD for setup is only one link, and the first MLD is to transmit the first request frame on the requested link, the first MLD can also carry the link capability information and/or the operational information of the requested link for transmitting the first request frame in the first link information field of the first multi-link element in the first request frame. That is, in the implementation, the first multi-link element in the first request frame can include the first common information field and the first link information field. The first common information field indicates information that is common to the current requested link for transmitting the first request frame and the current at least one setup link. The first link information field indicates related information of the current requested link for transmitting the first request frame.

In another possible implementation, if the at least one requested link which is requested for setup is implemented as multiple requested links, and the first MLD is to transmit the first request frame on one of the multiple requested links (for example, the first requested link), the link capability information and/or the operational parameter of the first requested link for transmitting the first request frame can be carried in the frame body of the first request frame. In addition, the first multi-link element can include the first common information field and the first link information field, and link capability information and/or an operational parameter of another requested link(s) (for example, one or more second requested links) other than the first requested link in the multiple requested links which are requested for setup can be carried in the first link information field. Specifically, the first link information field includes a first per-STA profile subelement of each second requested link, where the second requested link is a link other than the first requested link in the at least one requested link. For each second requested link, link capability information and/or an operational parameter of the second requested link is carried in a first per-STA profile subelement of the second requested link.

Accordingly, in embodiments of the disclosure, an RSNE of the first requested link for transmitting the first request frame can be carried in the frame body of the first request frame. If there is another requested link(s), an RSNE of the other requested link can be carried in a first per-STA profile subelement of the other requested link in the first link information field. The RSNE of the first requested link for transmitting the first request frame can also be carried in the first link information field. If there is another requested link, the RSNE of the other requested link is carried in the first per-STA profile subelement of the other requested link in the first link information field.

In embodiments of the disclosure, the first request frame to be transmitted on the requested link can be a new-link association request frame, where the new-link association request frame is used for requesting to add the first requested link for transmitting the first request frame and/or the second requested link after completion of multi-link setup.

The following will describe in detail a scenario of transmitting the first request frame on a setup link.

In another embodiment of the disclosure, if the first request frame is to be transmitted on one of the at least one setup link, the first multi-link element can include the first common information field and the first link information field; and for each of the at least one requested link, link capability information and/or an operational parameter of the requested link is carried in a first per-STA profile subelement of the requested link in the first link information field.

It should be understood that, if the first request frame is to be transmitted on a setup link, for each of the at least one requested link which is requested for setup, link capability information and/or an operational parameter of the requested link is carried in the first link information field in the first multi-link element, and specifically, is carried in a first per-STA profile subelement of the corresponding link in the first link information field.

In embodiments of the disclosure, the first request frame to be transmitted on the setup link can be an addition request frame. Different from the new-link association request frame in the foregoing embodiments, the addition request frame herein is used for requesting to add the at least one requested link after completion of multi-link setup.

Optionally, in embodiments of the disclosure, the link capability information of each of the at least one requested link which is requested for setup can include at least one of: an RSN capability, an RSNE capability, an extended RSNE capability, or an RSN extended element capability.

It should be understood that, the requested links can have the same or different link capability information.

Optionally, in the at least one requested link, link capability information of different requested links is the same as the common capability information of the at least one setup link, and/or operational parameters of different requested links are the same as the common operational information of the at least one setup link.

It should be understood that, the link capability information corresponding to each requested link carried in the first request frame can be the same as the common capability information of the at least one setup link, and the operational parameter corresponding to each requested link carried in the first request frame can also be the same as the common operational information of the at least one setup link.

As can be seen, if the link capability information corresponding to each requested link carried in the first request frame is the same as the common capability information of at least one setup link, the first MLD can use the capability information as the common capability information, and carry the capability information in the first common information in the first multi-link element. Alternatively, the first MLD can carry the link capability information of each requested link separately in the frame body of the first request frame and/or the first link information field in the first request frame in the manner described in the foregoing embodiments, which is not limited in embodiments of the disclosure.

Optionally, the first request frame can further include an RSNE and/or an RSN extended element corresponding to each requested link, where each RSNE contains at least part of link capability information and/or an operational parameter of a requested link corresponding to the RSNE, and each RSN extended element contains at least part of link capability information and/or an operational parameter of a requested link corresponding to the RSN extended element.

It should be understood that, in embodiments of the disclosure, if the first request frame is to be transmitted on one of the at least one requested link (for example, the first requested link), an RSNE and/or an RSN extended element of the first requested link can be carried in the frame body of the first request frame, while an RSNE and/or an RSN extended element of another requested link(s) (for example, one or more second requested links) can be carried in the first per-STA profile subelement of each second requested link.

In addition, if the first request frame is to be transmitted on one of the at least one setup link, the first per-STA profile subelement in the first link information field in the first multi-link element in the first request frame can include an RSNE(s) and/or an RSN extended element(s). Link RSNE-capability information and/or an operational parameter of each requested link is indicated by an RSNE and/or an RSN extended element of the requested link.

It should be noted that, if the first MLD fails to determine whether the link capability of the at least one requested link is compatible with the link common capability and/or whether the operational requirement of the at least one first affiliated STA is compatible with the link common operation, the first MLD needs to carry link capability information and/or an operational parameter of each requested link in the first request frame transmitted, so that the second MLD can perform compatibility authentication according to the link capability information and/or the operational parameter of each requested link.

In embodiments of the disclosure, after multi-link setup between the first MLD and the second MLD is completed, if the first MLD still has an unassociated affiliated STA and the first MLD has discovered that the second MLD has an affiliated STA that is unassociated with the unassociated affiliated STA (it can also mean that the first MLD has not set up a link corresponding to the affiliated STA with the second MLD), the first MLD can transmit the first request frame to the second MLD, and perform multi-link reconfiguration with the second MLD to request setup of one or more requested links.

In embodiments of the disclosure, the first request frame can be an addition reconfiguration multi-link element added to a request frame body defined in institute of electrical and electronics engineers (IEEE) 802.11. Referring to table 2, the rule for adding the addition reconfiguration multi-link element to the frame body can include the following. If the first MLD supports multi-link operation (for example, *dot11MultiLinkActivated* is true) and the first MLD and the second MLD have completed multi-link setup, the first request frame includes the first multi-link element (i. e. a first addition reconfiguration multi-link element). If the first MLD supports multi-link operation (for example, *dot11MultiLinkActivated* is true) but the first MLD and the second MLD have not completed multi-link setup, the first request frame includes a basic multi-link element. If the first MLD does not support multi-link operation (for example, dot11MultiLinkActivated is false), the first request frame does not include the first multi-link element and the basic multi-link element.

**Table 2**

| Order | Information | Notes |
|---|---|---|
| <Last assigned + 1> | Multi-link | If the first MLD supports multi-link operation and the first MLD and the second MLD have completed multi-link setup, the first request frame includes the first addition reconfiguration multi-link element; |
| | | if the first MLD supports multi-link operation but the first MLD and the second MLD have not completed multi-link setup, the first request frame includes the basic multi-link element; |
| | | if the first MLD does not support multi-link operation, the first request frame does not include the first addition reconfiguration multi-link element |
| <Last assigned + 2> | Extremely high throughput (EHT) capabilities | / |
| <Last assigned + 3> | Traffic identifier (TID)-to-link mapping | / |

It can be understood that, after multi-link setup between the first MLD and the second MLD is completed successfully, that is, after the first MLD is already associated with the second MLD, if the first MLD still has an unassociated affiliated STA and the first MLD has discovered that the second MLD has an affiliated STA that is unassociated with the first MLD (i. e. the first MLD has not set up a link corresponding to the affiliated STA of the second MLD with the second MLD), then the first MLD can initiate link reconfiguration with the second MLD through the new-link association request frame on a requested link that is not yet set up and requested to set up, so as to request to set up one or more requested links. The first MLD can also initiate link reconfiguration with the second MLD, through the addition request frame on a setup link which is already set up successfully, so as to request to set up one or more requested links.

The first request frame can include the new-link association request frame or the addition request frame. The new-link association request frame can be transmitted on a requested link which is requested for setup, and frame body of the new-link association request frame can carry STA information at the first MLD corresponding to the requested link for transmitting the new-link association request frame. The first addition reconfiguration multi-link element carried in the new-link association request frame includes the first common information field and/or the first link information field. The first common information field contains information that is common to the setup link and the requested link. The first link information field can include a first per-STA profile subelement corresponding to zero or one or more requested links and/or a first per-STA profile subelement corresponding to another setup link(s) affected by the requested link, where the first per-STA profile subelement describes STA information corresponding to a requested link or STA information corresponding to other setup links affected by the requested link.

In addition, the addition request frame can be transmitted on a setup link. The first addition reconfiguration multi-link element carried in the addition request frame includes the first common information field and the first link information field. The first common information field contains information that is common to the setup link and the requested link. The first link information field can include a first per-STA profile subelement corresponding to one or more requested links and/or a first per-STA profile subelement corresponding to another setup link(s) affected by the requested link, where the first per-STA profile subelement describes STA information corresponding to a requested link or STA information corresponding to other setup links affected by the requested link.

The first response frame will be described in detail below.

Optionally, the first response frame includes a second multi-link element, where the second multi-link element can be a reconfiguration variant multi-link element. In embodiments of the disclosure, the first multi-link element can also be referred to as a second addition reconfiguration multi-link element, where the second addition reconfiguration multi-link element is used for adding the at least one requested link after completion of multi-link setup.

Optionally, the second multi-link element can include a second common information field and/or a second link information field.

The second common information field indicates information that is common to the at least one requested link and the at least one setup link.

Optionally, the second common information field can include at least one of: MLD MAC address information of the second MLD, second common capability information, second common operational information, a BSS parameter change count subfield, or a link ID. The second common capability information indicates a capability common to the at least one setup link and the at least one requested link. The second common operational information indicates an operation common to the at least one setup link and the at least one requested link. The BSS parameter change count subfield is used for counting a critical update to a BSS parameter. The link ID indicates a link ID of a link for transmitting the first response frame.

Optionally, the second common capability information can include, but is not limited to, at least one of: an MLD capability of the second MLD, an EML capability of the second MLD, an RSN capability, an RSNE capability, an extended RSNE capability, or an RSN extended element capability.

Optionally, the first common operational information can include: an AKM suite selector and/or a pairwise cipher suite common to the at least one setup link and the at least one requested link.

In embodiments of the disclosure, the second link information field can indicate link information of the at least one requested link and/or link information of at least one first setup link, where the first setup link is a link associated with the at least one requested link in the at least one setup link.

That is, the second link information field can indicate the link information of the at least one requested link and/or link information of at least one setup link associated with the at least one requested link.

Optionally, the setup link associated with the at least one requested link described in embodiments of the disclosure can also refer to a setup link affected by the at least one requested link. Exemplarily, the first setup link can be a setup link whose NSTR-related operation is affected by a new link.

Optionally, the second link information field contains STA information of an affiliated STA of the second MLD associated with each of the at least one requested link and/or each of the at least one first setup link.

Optionally, the STA information can be carried in a second per-STA profile subelement.

That is, the second link information field can include a second per-STA profile subelement corresponding to the at least one requested link and/or a second per-STA profile subelement corresponding to the at least one setup link affected by the at least one requested link. The second per-STA profile subelement describes STA information corresponding to a requested link and/or STA information corresponding to the setup link affected by the requested link.

Optionally, the second per-STA profile subelement includes, but is not limited to, at least one of: a second subelement ID subfield, a second length subfield, a second STA control subfield, a second STA information subfield, or a second STA profile subfield. The second subelement ID subfield indicates a subelement ID of the second per-STA profile subelement. The second length subfield indicates a length of the second per-STA profile subelement. The second STA control subfield indicates STA control information. The second STA information subfield indicates STA information. The second STA profile subfield indicates STA profile information.

A complete profile subfield of a second STA control subfield of each second per-STA profile subelement in the second link information field can be set to 1.

Optionally, the first response frame further includes a second transmitter STA information field, where the second transmitter STA information field indicates STA information of an affiliated STA of the second MLD associated with a link for transmitting the first response frame.

It should be understood that, since the first response frame can be transmitted on one of the at least one requested link or can be transmitted on one of the at least one setup link, a frame body of the first response frame can further include the second transmitter STA information field, so as to indicate, through the second transmitter STA information subfield, the STA information of the affiliated STA of the second MLD associated with the link for transmitting the first response frame.

That is, the first response frame can include the second transmitter STA information field and the second multi-link element.

The following will describe in detail a scenario of transmitting the first response frame on a requested link.

Optionally, if the first response frame is to be transmitted on a third requested link which is one of the at least one requested link, the first response frame can further include a status code field, where the status code field indicates a setup result of the third requested link.

That is, if the first response frame is to be transmitted on one of the at least one requested link (for example, the third requested link), the first response frame can further include a status code field of the third requested link.

Optionally, if the third requested link is accepted by the second MLD, the status code field indicates success of addition of the third requested link. If the third requested link is rejected by the second MLD, the status code field indicates failure of link addition of the third requested link and/or a reason for the failure.

It can be understood that, the first MLD can determine, according to the status code field, whether the requested link for transmitting the first response frame is added successfully. If the addition fails, the reason for the failure can be determined according to the indication of the status code field.

Optionally, for the case where the first MLD fails to determine whether the link capability of the at least one requested link is compatible with the link common capability and/or whether the operational requirement of the at least one first affiliated STA is compatible with the link common operation, if the second MLD determines that a link capability of the third requested link is incompatible with the link common capability and/or an operational requirement of a first affiliated STA corresponding to the third requested link is incompatible with the link common operation, the status code field indicates that the reason for the failure of the third requested link is: the link capability of the third requested link is incompatible with the link common capability and/or the operational requirement of the first affiliated STA corresponding to the third requested link is incompatible with the link common operation.

It can be understood that, for the case where the first MLD fails to determine whether the link capability of the at least one requested link is compatible with the link common capability and/or whether the operational requirement of the at least one first affiliated STA is compatible with the link common operation, the second MLD can authenticate compatibility of the third requested link. If the link capability of the third requested link is compatible with the link common capability and/or the operational requirement of the first affiliated STA corresponding to the third requested link is compatible with the link common requirement, the second MLD can further determine, according to other factors, whether to accept the requested link, and set the value of the status code field according to the determination result.

If the link capability of the third requested link is incompatible with the link common capability and/or the operational requirement of the first affiliated STA corresponding to the third requested link is incompatible with the link common requirement, the second MLD can directly reject addition of the third requested link, and indicates, through the status code field, failure of addition of the third requested link and/or the reason for the failure is: the link capability of the third requested link is incompatible with the link common capability and/or the operational requirement of the first affiliated STA corresponding to the third requested link is incompatible with the link common operation.

Optionally, as illustrated in table 3, for the case where the first MLD fails to determine whether the link capability of the at least one requested link is compatible with the link common capability and/or whether the operational requirement of the at least one first affiliated STA is compatible with the link common operation, if the second MLD determines that the link capability of the third requested link is incompatible with the link common capability and/or the operational requirement of the first affiliated STA corresponding to the third requested link is incompatible with the link common operation, the second MLD can set the status code field of the third requested link to "132", so as to indicate that the reason for the failure of addition of the third requested link is "incompatibility with setup link".

Accordingly, after receiving the first response frame, the value "132" is obtained by parsing the status code field of the frame body of the first response frame, and then the first MLD can determine that addition of the third requested link for transmitting the first response frame failed, and the reason for the failure is "incompatibility with setup link".

**Table 3**

| Status code | Name | Meaning |
|---|---|---|
| 132 | *DENIED_ FAILURE_OF_COMPATIBILITY* | Association failure or link setup failure due to incompatibility with setup link |

It should be noted that, the value "132" of the status code is only illustrative, and other values of the status code that can indicate "association failure or link addition failure due to incompatibility with setup link" shall all fall within the protection scope of the disclosure.

Optionally, the status code field of the third requested link is carried in at least one of: the frame body of the first response frame, or the second link information field in the second multi-link element.

It should be understood that, the status code field of the third requested link for transmitting the first response frame can be carried in the frame body of the first response frame, or can be carried in the second link information field in the second multi-link element, which is not limited in embodiments of the disclosure.

In a possible implementation, if the requested link which is requested by the first MLD for setup is only one link, and the second MLD is to transmit the first response frame on the requested link, then the second MLD can directly carry the status code of the requested link for transmitting the first response frame in the frame body of the first request frame. Accordingly, in the implementation, the second multi-link element in the first response frame may not include the second link information field.

In another possible implementation, if the requested link which is requested by the first MLD for setup is only one link, and the second MLD is to transmit the first response frame on the requested link, then the second MLD can also carry the status code field of the requested link for transmitting the first response frame in the second link information field in the second multi-link element in the first response frame. That is, in the implementation, the second multi-link element in the first response frame can include the second common information field and the second link information field. As such, the second common information field indicates information that is common to the current requested link for transmitting the first response frame and the at least one current setup link, and the second link information field indicates a setup result of the current requested link for transmitting the first response frame.

In another possible implementation, if the requested link which is requested by the first MLD for setup is multiple requested links, and the second MLD is to transmit the first response frame on only one of the multiple requested links (for example, the third requested link), then the second MLD can directly carry the status code of the third requested link for transmitting first response frame in the frame body of the first request frame. In addition, the second multi-link element includes the second common information field and the second link information field. A setup result of another requested link(s) (for example, one or more fourth requested link) other than the third requested link in the multiple requested links can be carried in the second link information field. Specifically, the second link information includes a second per-STA profile subelement of each fourth requested link. A second per-STA profile subelement of each fourth requested link further includes a status code subfield of the fourth requested link, and the status code subfield of the fourth requested link indicates a setup result of the corresponding fourth requested link.

A status code subfield of a fourth requested link accepted by the second MLD indicates success of link addition. On the other hand, a status code subfield of a fourth requested link rejected by the second MLD indicates failure of link addition and/or a reason for the failure.

It should be noted that, for the case where the requested link which is requested by the first MLD for setup is multiple requested links and the second MLD is to transmit the first response frame on only one of the multiple requested links (for example, the third requested link), if the second MLD rejects setup of the third requested link for transmitting the first response frame, new-link reconfiguration fails, and no multi-link setup is performed for other requested links, that is, no new link is set up.

That is, the second MLD can firstly determine whether to accept setup of the third requested link for transmitting the first response frame. If the second MLD determines to accept setup of the third requested link, the second MLD can further determine whether to accept setup of another setup link(s) (for example, one or more fourth requested links). If the second MLD determines to reject setup of the third requested link, the second MLD may not make determination regarding other requested links, and status code subfields of other requested links are directly set to "addition failure" and/or "the reason for the failure is addition failure of third requested link". In this way, it is possible to reduce operation complexity of the device.

Optionally, as illustrated in table 4, after the second MLD decides to reject setup of the third requested link, the second MLD may not make determination regarding setup of the fourth requested link, and instead, set directly the status code subfield of each fourth requested link to "131", so as to indicate that the reason for failure of addition of each fourth requested link is "setup failure of link for transmitting new-link association request frame/new-link association response frame".

**Table 4**

| Status code | Name | Meaning |
|---|---|---|
| 131 | *DENIED_FAILURE_OF_INITIATING_LINK* | Association failure or link setup failure due to setup failure of link for transmitting new-link association request frame/new-link association response frame |

It should be noted that, the value "131" of the status code is only illustrative, and other values of the status code that can indicate "association failure or link setup failure due to setup failure of link for transmitting new-link association request frame/new-link association response frame" shall all fall within the protection scope of the disclosure.

Optionally, if the link capability of the third requested link is incompatible with the link common capability and/or the operational requirement of the first affiliated STA corresponding to the third requested link is incompatible with the link common operation, the status code subfield of each fourth requested link indicates failure of link addition, and/or the status code subfield of each fourth requested link indicates that the reason for the failure is: setup failure of the third requested link.

That is, if the first MLD fails to determine whether the link capability of the at least one requested link is compatible with the link common capability and/or whether the operational requirement of the at least one first affiliated STA is compatible with the link common operation, the second MLD can authenticate compatibility of the third requested link. If the link capability of the third requested link is incompatible with the link common capability and/or the operational requirement of the first affiliated STA corresponding to the third requested link is incompatible with the link common requirement, the second MLD can directly reject addition of the third requested link, set the status code field of the third requested link to "addition failure", and indicate failure of addition of the third requested link and/or indicate that the reason for the failure is: the link capability of the third requested link is not compatible with the link common capability. Further, the second MLD can also set a status code subfield of each of other requested links (for example, one or more fourth requested links) to "addition failure", and can also indicate that the reason for the failure of each requested link is: setup failure of the third requested link.

Optionally, with reference to the content illustrated in table 3 and table 4, for the case where the first MLD fails to determine whether the link capability of the at least one requested link is compatible with the link common capability and/or whether the operational requirement of the at least one first affiliated STA is compatible with the link common operation, if the second MLD determines that the link capability of the third requested link is incompatible with the link common capability and/or the operational requirement of the first affiliated STA corresponding to the third requested link is incompatible with the link common operation, then the second MLD can set the status code field of the third requested link to "132", so as to indicate that the reason for failure of addition of the third requested link is "incompatible with setup link". Further, the second MLD can set the status code subfield of each fourth requested link to "131", so as to indicate that the reason for failure of addition of the fourth requested link is "setup failure of link for transmitting new-link association request frame/new-link association response frame".

It should be noted that, for the case where the first MLD fails to determine whether the link capability of the at least one requested link is compatible with the link common capability and/or whether the operational requirement of the at least one first affiliated STA is compatible with the link common operation, besides setup failure of the third requested link due to incompatibility between the third requested link and the setup link, for setup failure of the third requested link due to other reasons, the second MLD can also set the status code subfield of each fourth requested link to "131", so as to indicate that the reason for failure of addition of each fourth requested link is: "setup failure of link for transmitting new-link association request frame/new-link association response frame".

Accordingly, after receiving the first response frame, the value "132" is obtained by parsing the status code field in the frame body of the first response frame, and then the first MLD can determine that addition of the third requested link for transmitting the first response frame failed, and the reason for the failure is: incompatibility with setup link. In addition, the value "131" is obtained by parsing a status code subfield in a second per-STA profile subelement of a certain fourth requested link, and then the first MLD can determine that the reason for failure of addition of the fourth requested link is "setup failure of link for transmitting new-link association request frame/new-link association response frame".

In addition, if the link capability of the third requested link is compatible with the link common capability and/or the operational requirement of the first affiliated STA corresponding to the third requested link is compatible with the link common operation, and the second MLD determines to accept setup of the third requested link, then the second MLD can determine compatibility of other requested links (for example, one or more fourth requested links). In addition, if the second MLD determines that a link capability of a certain fourth requested link is incompatible with the link common capability and/or an operational requirement of a first affiliated STA corresponding to the fourth requested link is incompatible with the link common requirement, as illustrated in FIG. 3, the second MLD can set a status code subfield of the fourth requested link to "132", so as to indicate that the reason for failure of addition of the fourth requested link is "incompatible with setup link".

In embodiments of the disclosure, the first response frame to be transmitted on a requested link can be a new-link association response frame, where the new-link association response frame can be used for at least one of: adding or rejecting the third requested link for transmitting the first response frame after completion of multi-link setup, or adding or rejecting the fourth requested link after completion of multi-link setup.

It should be noted that, a link for the first MLD to transmit the first request frame is the same as a link for the second MLD to transmit the first response frame. That is, in embodiments of the disclosure, the first requested link and the third requested link can be the same link.

The following will describe in detail a scenario of transmitting the first response frame on a setup link.

In an embodiment of the disclosure, if the link for transmitting the first response frame is one of the at least one setup link, the second multi-link element can include the second common information field and the second link information field. For each of the at least one requested link, a setup result of the requested link is indicated by a status code subfield in a second per-STA profile subelement of the requested link in the second link information field, where a status code subfield of a requested link accepted by the second MLD indicates success of link addition, and a status code subfield of a requested link rejected by the second MLD indicates failure of link addition and/or a reason for the failure.

It should be understood that, if the first response frame is to be transmitted on a setup link, for each of the at least one requested link, the setup result of the requested link can be indicated by the status code subfield of the second per-STA profile subelement of the requested link in the second link information field.

Optionally, in embodiments of the disclosure, for the case where the first MLD fails to determine whether the link capability of the at least one requested link is compatible with the link common capability and/or whether the operational requirement of the at least one first affiliated STA is compatible with the link common operation, if a link capability of a certain requested link is incompatible with the link common capability and/or an operational requirement of a corresponding first affiliated STA is incompatible with the link common operation, a status code subfield of the requested link can indicate failure of link addition and/or indicate that a reason for the failure is: the link capability is incompatible with the link common capability and/or the operational requirement of the first affiliated STA is incompatible with the link common operation.

That is, in embodiments of the disclosure, the second MLD can perform compatibility authentication for each requested link; and if a link capability of a certain requested link is incompatible with the link common capability and/or an operational requirement of a first affiliated STA corresponding to the requested link is incompatible with the link common operation, the second MLD can indicate, through a status code subfield in a second per-STA profile subelement of the requested link, that link addition failed, and the reason for the failure is: the link capability is incompatible with the link common capability and/or the operational requirement of the first affiliated STA is incompatible with the link common operation.

Optionally, as illustrated in table 3, for the case where the first MLD fails to determine whether the link capability of the at least one requested link is compatible with the link common capability and/or whether the operational requirement of the at least one first affiliated STA is compatible with the link common operation, if the second MLD determines that a link capability of a certain requested link is incompatible with the link common capability and/or an operational requirement of a first affiliated STA corresponding to the requested link is incompatible with the link common operation, the second MLD can set a state code subfield of the requested link to "132" to indicate the reason for the failure of addition of the requested link.

Accordingly, after receiving the first response frame, the value "132" is obtained by parsing a status code field of a second per-STA profile subelement of a certain requested link, and then the first MLD can determine that addition of the requested link failed, and the reason for the failure is "incompatible with setup link".

In embodiments of the disclosure, the first response frame to be transmitted on a setup link can be an addition response frame. Different from the new-link association response frame in the foregoing embodiments, the addition response frame herein is used for adding or rejecting the at least one requested link after completion of multi-link setup.

It should be noted that, a link for transmitting the first request frame is the same as a link for receiving the first response frame. That is, if the link for transmitting the first request frame is a requested link, the link for transmitting the first response frame is also the requested link. If the link for transmitting the first request frame is a setup link, the link for transmitting the first response frame is also the setup link. In addition, a new-link association request frame to be exchanged on a requested link corresponds to a new-link association response frame, and an addition request frame to be exchanged on a setup link corresponds to an addition response frame.

In embodiments of the disclosure, the first response frame can be an addition reconfiguration multi-link element added to a response frame body defined in IEEE 802.11. Referring to table 5, the rule for adding the addition reconfiguration multi-link element to the frame body can include the following. If the second MLD supports multi-link operation (for example, *dot11MultiLinkActivated* is true) and the second MLD and the first MLD have completed multi-link setup, the first response frame includes the second multi-link element (i. e. a second addition reconfiguration multi-link element). If the second MLD supports multi-link operation (e. g., *dot11MultiLinkActivated* is true) but the second MLD and the first MLD have not complete multi-link setup, the first response frame includes a basic multi-link element. If the second MLD does not support multi-link operation (for example, *dot11MultiLinkActivated* is false), the first response frame does not include the second multi-link element and the basic multi-link element.

**Table 5**

| Order | Information | Notes |
|---|---|---|
| <Last assigned + 1> | Multi-link | If the second MLD supports multi-link operation and the first MLD and the second MLD have completed multi-link setup, the first response frame includes the second addition reconfiguration multi-link element; |
| | | if the second MLD supports multi-link operation but the first MLD and the second MLD have not completed multi-link setup, the first response frame includes the basic multi-link element; |
| | | if the second MLD does not support multi-link operation, the first response frame does not include the second addition reconfiguration multi-link element |
| <Last assigned + 2> | EHT capabilities | / |
| <Last assigned + 3> | EHT operation | |
| <Last assigned + 4> | TID-to-link mapping | / |

It can be understood that, the first response frame can be transmitted by an affiliated STA (for example, an affiliated AP) of the second MLD, and is used for responding to the first request frame, so as to indicate acceptance or rejection of the at least one requested link which is requested by the first MLD for setup. The first response frame can include the new-link association response frame or the addition response frame. The new-link association response frame can be transmitted on a requested link which is requested for setup, and a frame body of the new-link association response frame can carry STA information at the second MLD corresponding to the requested link for transmitting the new-link association response frame. The second addition reconfiguration multi-link element carried in the new-link association response frame includes the second common information field and/or the second link information field. The second common information field contains information that is common to the setup link and the requested link. The second link information field can include a second per-STA profile subelement(s) corresponding to zero or one or more requested links and/or a second per-STA profile subelement(s) corresponding to another setup link(s) affected by the requested link, where the second per-STA profile subelement indicates the STA information corresponding to a requested link or STA information corresponding to other setup links affected by the requested link.

In addition, the addition response frame can be transmitted on a setup link. The second addition reconfiguration multi-link element carried in the addition response frame includes the second common information field and the second link information field. The second common information field contains information that is common to the setup link and the requested link. The second link information field can include a second per-STA profile subelement corresponding to one or more requested links and/or a second per-STA profile subelement corresponding to another setup link(s) affected by the requested link, where the second per-STA profile subelement indicates STA information corresponding to a requested link or STA information corresponding to other setup links affected by the requested link.

The authentication process will be described in detail below.

In embodiments of the disclosure, through exchange of the first request frame and the first response frame, the first MLD can set up at least one new link with the second MLD. The at least one new link can be some or all of the at least one requested link, which is not limited in embodiments of the disclosure.

Optionally, after adding at least one new link, the method for multi-link reconfiguration provided in an embodiment of the disclosure can further include the following. The first MLD and the second MLD perform security authentication for the at least one new link and the at least one setup link, or perform security authentication for the at least one new link.

The security authentication can be RSNA authentication.

In a possible implementation, if the first MLD is in a first state, the first MLD and the second MLD perform security authentication for the at least one new link and the at least one setup link, where the first state indicates that security authentication of at least some of the at least one setup link is not completed.

It can be understood that, if the first MLD is already associated with the second MLD, but RSNA authentication for at least some of the at least one setup link is not completed, the first MLD and the second MLD can perform RSNA authentication for affiliated STAs associated with all the new links and affiliated STAs associated with all the setup links after setup of the new link is completed.

After setup of the new link is completed, the first MLD and the second MLD can perform RSNA authentication for the affiliated STAs associated with all the new links and the affiliated STAs associated with all the setup links by means of a conventional 4-way handshake procedure.

In another possible implementation, if the first MLD is in a second state, the first MLD and the second MLD perform security authentication for the at least one new link, where the second state indicates that security authentication of all the at least one setup link is completed.

It can be understood that, if the first MLD is already associated with the second MLD and RSNA authentication for the at least one setup link is completed, the first MLD and the second MLD can perform RSNA authentication for the new link after setup of the new link is completed.

Optionally, a first-part transmission parameter applied to the at least one new link is the same as a first-part parameter applied to the at least one setup link, and/or the at least one new link is re-setup by using a second-part parameter.

Optionally, the first-part parameter can include, but is not limited to, at least one of: a pairwise transient key (PTK) or an association ID (AID).

Optionally, the second-part parameter can include, but is not limited to, at least one of: a group temporal key (GTK), an integrity group temporal key (IGTK), or a beacon integrity group temporal key (BIGTK).

That is, an existing MLD-level operation and management parameter (such as PTK and AID) that is not affected by link addition operation is inherited by the at least one setup link and the at least one new link, and in addition, an operation and management parameter (such as GTK/IGTK/BIGTK) specific to the new link can be regenerated. It should be noted that, an MLD-level operation and management parameter (such as a maximum number of simultaneous links field) affected by link addition operation can be updated.

Optionally, the first MLD and the second MLD perform security authentication for the at least one new link as follows. The first MLD and the second MLD exchange a handshake message, where the exchange of the handshake message is used for generating a second-part transmission parameter for the at least one new link.

It can be understood that, the first-part parameter generated for a link that was successfully setup before link addition can be inherited by the new link that is successfully set up between the first MLD and the second MLD, and the second-part parameter applied to each of the at least one new link can be generated by the first MLD and the second MLD through exchange of the handshake message.

Optionally, the first MLD and the second MLD can complete RSNA authentication through 4-way handshake messages, so as to generate the second-part transmission parameter for the at least one new link. The exchange of the 4-way handshake messages can include the following steps. The first MLD receives a first handshake message transmitted by the second MLD, where the first handshake message is used for confirming whether the first-part transmission parameter is applied to the at least one new link. The first MLD transmits a second handshake message to the second MLD, where the second handshake message is used for synchronizing or confirming the first-part transmission parameter applied to the at least one new link. The first MLD receives a third handshake message transmitted by the second MLD, where the third handshake message indicates a second-part transmission parameter applied to each of the at least one new link. The first MLD transmits a fourth handshake message to the second MLD, where the fourth handshake message is used for confirming a second-part transmission parameter applied to each new link that is successfully set up.

It should be noted, that the 4-way handshake protocol in embodiments of the disclosure is different from the conventional 4-way handshake protocol. The 4-way handshake protocol in embodiments of the disclosure can be referred to as a 4-way handshake protocol for new link. Specifically, in the 4-way handshake protocol for new link, the first-part transmission parameter for the new link(s) is confirmed and synchronized; and the second-part transmission parameter applied to each new link is generated for the new link.

In the 4-way handshake protocol for new link, the parameters carried in EAPOL-Key frames and application rules for the EAPOL-Key frames defined in IEEE 802.11 are updated.

In the 4-way handshake protocol for new link, the first handshake message (message 1) and the second handshake message (message 2) are used for confirming and synchronizing the first-part parameter applied to the new link(s) (different from the part of parameter generated in the conventional 4-way handshake protocol); and the third handshake message (message 3) and the fourth handshake message (message 4) are used for generating the second-part transmission parameter applied to each new link for the new link.

Optionally, the first handshake message (message 1) and the second handshake message (message 2) may not contain a nonce for generating the first-part transmission parameter.

Exemplarily, a parameter in message 1 in the 4-way handshake protocol for new link can include: EAPOL-Key(0,0,1,0,P,0,0,ANonce or 0,0,{} or {PMKID} or {MAC Address}).

As can be seen, the value of *ANonce* in message 1 can be 0, that is, message 1 may not contain the nonce *ANonce* used for generating the first-part transmission parameter.

In addition, a parameter in message 2 in the 4-way handshake protocol for new link can include:
EAPOL-Key(0,1,0,0,P,0,0,SNonce or 0,MIC,{RSNE} or {RSNE, OCI KDE} or {RSNE, RSNXE} or {RSNE, OCI KDE, RSNXE} or {RSNE, MAC Address} or {RSNE, RSNXE, MAC Address} or {RSNE, OCI KDE, RSNXE, MAC Address} or {RSNE, MAC Address, MLO Linkn} or {RSNE, RSNXE, MAC Address, MLO Linkn}or {RSNE, OCI KDE, RSNXE, MAC Address, MLO Linkn}).

As can be seen, the value of *SNonce* in message 2 can be 0, that is, the message 2 may not contain the nonce *SNonce* used for generating the first-part transmission parameter.

Optionally, the second handshake message (message 2) contains link information of each of the at least one new link. Exemplarily, the parameter *MLO Linkn* in message 2 can refer to the link information of the new link.

Optionally, the third handshake message (message 3) can contain at least one of: the link information of each of the at least one new link, a GTK of each new link, an IGTK of each new link, or a BIGTK of each new link.

Exemplarily, a parameter in message 3 in the 4-way handshake protocol for new link can include:
EAPOL-Key(1,1,1,1,P,0,KeyRSC,ANonce,MIC,{RSNE,GTK[N]} or {RSNE, GTK[N], OCI KDE} or {RSNE, GTK[N], RSNXE} or {RSNE, GTK[N], OCI KDE, RSNXE} or {MAC Address, MLO Linkn, MLO GTKn, MLO IGTKn, MLO BIGTKn} or {OCI KDE, MAC Address, MLO Linkn, MLO GTKn, MLO IGTKn, MLO BIGTKn}).

The parameter *MLO Linkn* in message 3 can refer to the link information of the new link. *MLO GTKn* refers to a GTK of the new link, *MLO IGTKn* refers to an IGTK of the new link, and *MLO BIGTKn* refers to a BIGTK of the new link.

Exemplarily, a parameter in message 4 in the 4-way handshake protocol for new link can include: EAPOL-Key(1,1,0,0,P,0,0,0,MIC,{} or {MAC Address}).

In an embodiment of the disclosure, the second-part transmission parameter can also be generated for each new link through two group handshake messages based on a group key handshake protocol. The first MLD exchanges the handshake message with the second MLD as follows. The first MLD receives a first group handshake message transmitted by the second MLD, where the first group handshake message indicates a second-part transmission parameter applied to each of the at least one new link. The first MLD transmits a second group handshake message to the second MLD, where the second group handshake message is used for confirming a second-part transmission parameter applied to each new link that is successfully set up.

Optionally, in embodiments of the disclosure, the at least one requested link and the at least one setup link are located on different nonoverlapping channels, different requested links use different nonoverlapping channels, and different setup links use different nonoverlapping channels.

It can be understood that, the first MLD needs to ensure that the at least one requested link which is requested for setup, as well as the at least one requested link which is requested for setup and the at least one setup link, is located on different nonoverlapping channels. In addition, the second MLD needs to ensure that different requested links that are accepted, as well as the new links and the links that are already successfully setup, are located on different nonoverlapping channels.

It should be noted that, in embodiments of the disclosure, the first MLD can be a non-AP MLD, and the second MLD can be an AP MLD. Alternatively, in embodiments of the disclosure, the first MLD is a non-AP MLD, and the second MLD is also a non-AP MLD, that is, a peer MLD.

The method for multi-link reconfiguration provided in embodiments of the disclosure will be described below with reference to specific application scenarios, where the first MLD can be a non-AP MLD, and the second MLD can be an AP MLD.

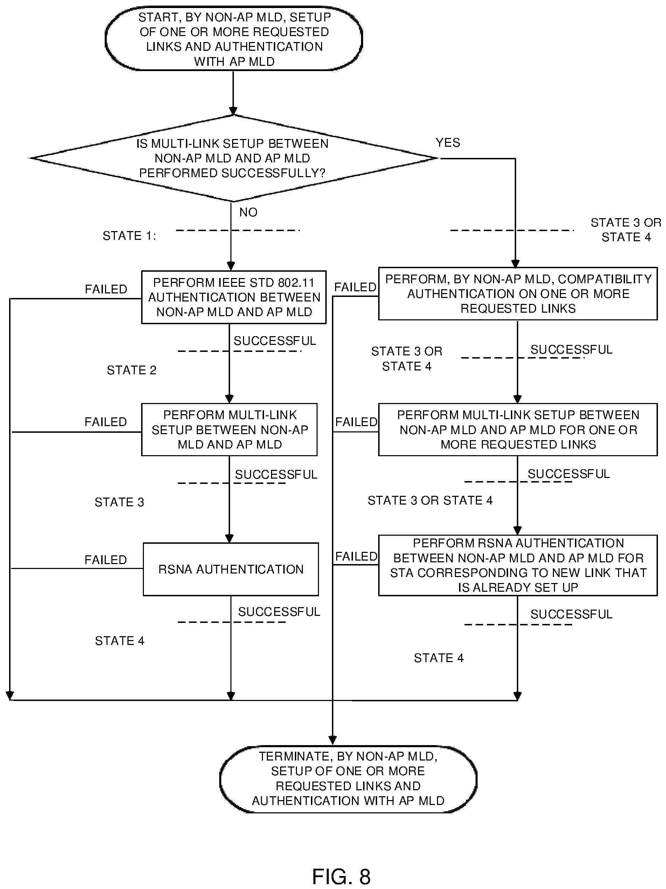

In the scenario where the non-AP MLD is already associated with the AP MLD and new-link reconfiguration is to be performed, the non-AP MLD can start setup of one or more links and authentication with the AP MLD with reference to a flowchart illustrated in FIG. 8.

Referring to FIG. 8, if the non-AP MLD has started setup of one or more links and authentication with the AP MLD, the non-AP MLD can firstly determine whether the non-AP MLD and the AP MLD have performed multi-link setup successfully (or whether the non-AP MLD is already associated with the AP MLD), and then determine a link setup and authentication procedure according to the determination result.

In some embodiments, if it is determined that the non-AP MLD is not yet associated with the AP MLD (or the non-AP MLD and the AP MLD have not yet performed multi-link setup successfully), the non-AP MLD can perform IEEE STD 802.11 authentication with the AP MLD. After the authentication succeeds, the non-AP MLD can perform multi-link setup with the AP MLD, and then perform RSNA authentication for the multiple links that are set up successfully. The RSNA authentication can be performed based on a conventional 4-way handshake protocol. "The non-AP MLD is in state 1" means that the non-AP MLD has not yet performed IEEE STD 802.11 authentication with the AP MLD. "The non-AP MLD is in state 2" means that the non-AP MLD has completed IEEE STD 802.11 authentication with the AP MLD. "The non-AP MLD is in state 3 (corresponding to the first state in the foregoing embodiments)" means that the non-AP MLD is already associated with the AP MLD, but security authentication of at least some of the at least one setup link is not yet completed. "The non-AP MLD is in state 4 (corresponding to the second state in the foregoing embodiments)" means that the non-AP MLD is already associated with the AP MLD, and security authentication of all the at least one setup link is completed. That is, all the setup links adopt the same PTK, and each setup link adopts its own GTK/IGTK/BIGTK.

In other embodiments, if it is determined that the non-AP MLD is already associated with the AP MLD (or the non-AP MLD and the AP MLD have performed multi-link setup successfully), the non-AP MLD can perform compatibility authentication for one or more requested links, where the requested link is a requested link requested by the non-AP MLD for setup.

Optionally, the non-AP MLD can perform compatibility authentication for the requested link by determining whether a link capability of the requested link is compatible with a link common capability of at least one setup link of the non-AP MLD and/or whether an operation of an affiliated STA corresponding to the requested link is compatible with a link common operation of the setup link.

Exemplarily, the non-AP MLD can determine whether the affiliated STA corresponding to the requested link supports an AKM suite selector and a pairwise cipher suite that are common to the current setup link(s). If the affiliated STA corresponding to the requested link supports the AKM suite selector and the pairwise cipher suite that are common to the current setup link, it can be considered that compatibility authentication of the requested link is successful.

After compatibility authentication of the requested link is successful, the non-AP MLD can perform multi-link setup with the AP MLD for one or more requested links. In one manner, the non-AP MLD can set up one or more requested links with the AP MLD through exchange of an addition multi-link association request frame and an addition multi-link association response frame on a requested link which is requested for setup. In another manner, the non-AP MLD can set up one or more requested links with the AP MLD through exchange of an addition request frame and an addition response frame on a setup link.

Further, if the non-AP MLD is in state 3 after setup of a new link is started, the non-AP MLD and the AP MLD perform RSNA authentication for affiliated STAs associated with all the setup links after setup of the new link is completed. If the non-AP MLD is in state 4 after setup of the new link is started, the non-AP MLD and the AP MLD perform RSNA authentication for an affiliated STA associated with the new link that is already set up.

It should be noted that, when performing RSNA authentication for the affiliated STA associated with the new link which is set up successfully, a multi-link common parameter or key, such as a PTK, that was generated by the non-AP MLD after RSNA authentication before setup of the new link needs to be inherited by the new link(s) that is set up by the non-AP MLD and the AP MLD, and each new link adopts its own GTK/IGTK/BIGTK. With regard to RSNA authentication for the affiliated STA of the non-AP MLD corresponding to the new link, a 4-way handshake protocol for new link can be adopted, on one hand, to confirm and synchronize the PTK of the new link(s), and on the other hand, to generate the GTK/IGTK/BIGTK of each new link respectively. Alternatively, the GTK/IGTK/BIGTK of each new link is generated based on a group key handshake protocol for new link.

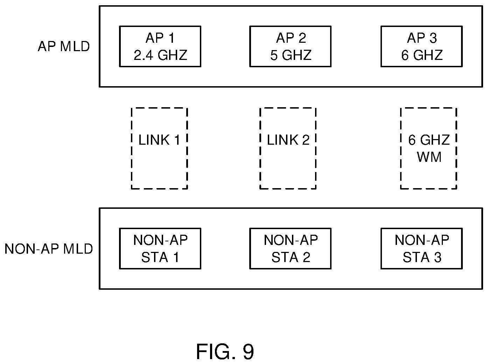

In another application scenario, referring to FIG. 9, the non-AP MLD can have three affiliated STAs, namely non-AP STA1, non-AP STA2, and non-AP STA3. In addition, the AP MLD can also have three affiliated STAs, namely AP1, AP2, and AP3. The non-AP MLD and the AP MLD have performed multi-link setup successfully, and set up link 1 between non-AP STA1 and AP1 and link 2 between non-AP STA2 and AP2, where non-AP STA1 is associated with AP1, and non-AP STA2 is associated with AP2, but no link is set up between non-AP STA3 and AP3, that is, non-AP STA3 is unassociated with AP3.

When implementing the new-link setup and authentication procedure for the affiliated STA (i. e. non-AP STA3) of the non-AP MLD for which no link has been set up, it is necessary to perform compatibility authentication on a link capability and an operational requirement of non-AP STA3, that is, determine whether non-AP STA3 supports the link common capability and/or the link common operation of the setup links (link 1 and link 2) between the non-AP MLD and the AP MLD, for example, authenticate whether non-AP STA3 supports both an AKM suite selector and a pairwise cipher suite that are common to the current setup links.

If it is determined that the non-AP STA3 supports the link common capability and/or the link common operation of the setup links (link 1 and link 2) between the non-AP MLD and the AP MLD, the non-AP MLD can perform multi-link setup with the AP MLD for a requested link by means of the method for setting up a new link for the associated MLD.

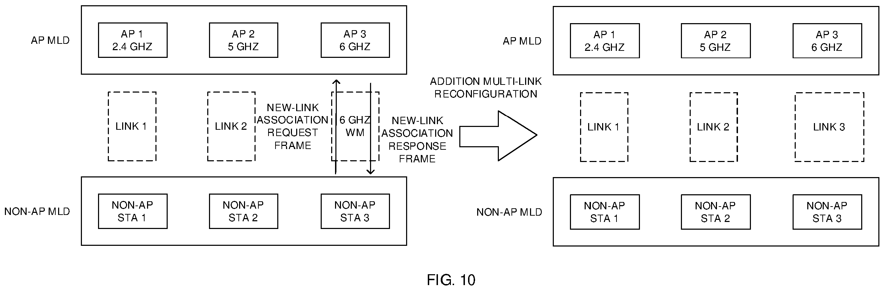

As illustrated in FIG. 10, the non-AP MLD can transmit a new-link association request frame to AP3 on a requested link, where a transmitter address (TA) field of the new-link association request frame can be set to a MAC address of non-AP STA3, and a receiver address (RA) field of the new-link association request frame can be set to a MAC address of AP3. The new-link association request frame includes an addition multi-link reconfiguration element, where the element indicates an MLD MAC address of the non-AP MLD, and complete information of non-AP STA3 is indicated by a frame body of the new-link association request frame. In this way, the link between non-AP STA3 and AP3 is requested to set up through the new-link association request frame.

Accordingly, the AP MLD responds to the new-link association request frame. AP3 sends a new-link association response frame to non-AP STA3, where a TA field of the new-link association response frame is set to a MAC address of AP3, and an RA field of the new-link association response frame is set to a MAC address of non-AP STA3, and the new-link association response frame indicates that the link (link 3) between non-AP STA3 and AP3 is set up successfully. The new-link association response frame includes an addition multi-link reconfiguration element, where the element can indicate an MLD MAC address of the AP MLD, and complete information of AP3 is indicated by a frame body of the new-link association response frame. After the non-AP MLD and the AP MLD have completed multi-link reconfiguration successfully, the link (i. e. link 3) between non-AP STA3 and AP3 is set up successfully.

Further, the non-AP MLD and the AP MLD can perform RSNA authentication for the new link (i. e. link 3) in one of the following two manners.

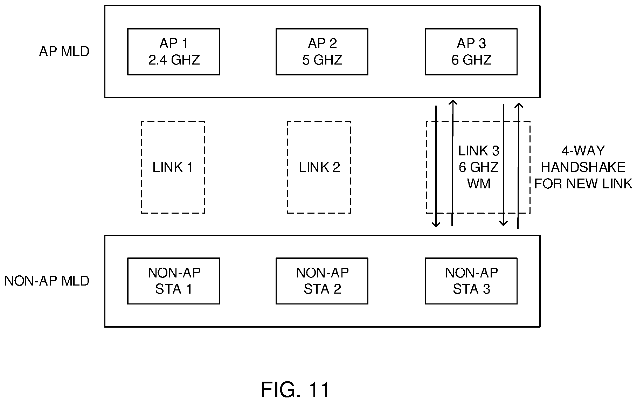

Manner 1: referring to FIG. 11, after link 3 is set up successfully, the non-AP MLD can perform RSNA authentication for the affiliated STA (non-AP STA3) corresponding to link 3, and specifically, implement the 4-way handshake protocol for new link on link 3. A PTK of link 3 is confirmed and synchronized through message 1 and message 2 of the 4-way handshake messages, and a GTK/IGTK/BIGTK of link 3 is generated through message 3 and message 4 of the 4-way handshake messages.

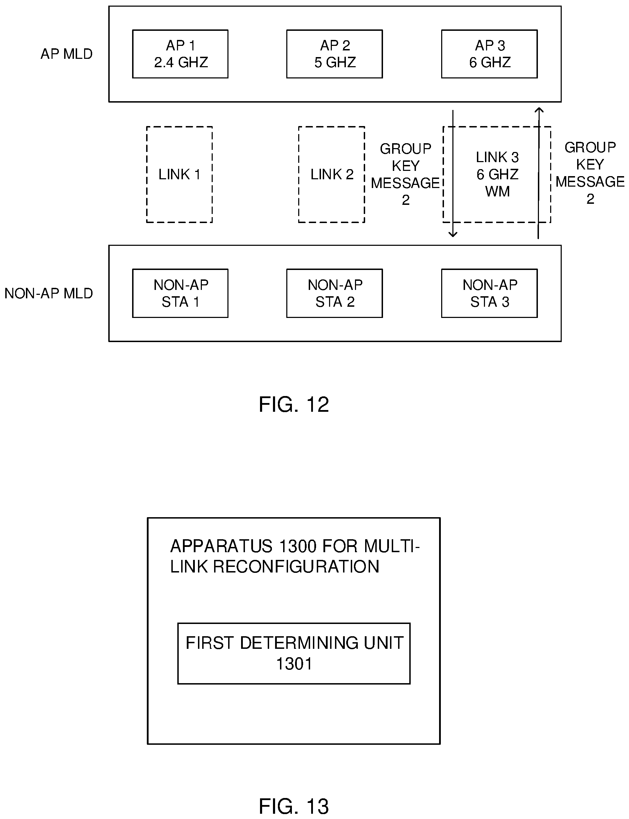

Manner 2: referring to FIG. 12, after link 3 is set up, a PTK of the setup links (link 1 and link 2) between the non-AP MLD and the AP MLD is inherited by link 3 for encryption and decryption of a unicast frame. In addition, the non-AP MLD and the AP MLD perform exchange of the group key handshake messages on link 3, and generate a GTK/IGTK/BIGTK of link 3 through group key handshake message 1 and group key handshake message 2.

FIG. 13 is schematic structural diagram I of an apparatus for multi-link reconfiguration provided in embodiments of the disclosure. The apparatus is applied to a first MLD. As illustrated in FIG. 13, the apparatus 1300 for multi-link reconfiguration includes a first determining unit 1301. The first determining unit 1301 is configured to determine whether a link capability of at least one requested link is compatible with a link common capability and/or whether an operational requirement of at least one first affiliated STA is compatible with a link common operation, if the first MLD and a second MLD have completed multi-link setup and set up at least one setup link, where the at least one first affiliated STA is an affiliated STA of the first MLD associated with the at least one requested link, the link common capability refers to a capability common to the at least one setup link, and the link common operation refers to an operation common to the at least one setup link.

Optionally, the link common capability includes at least one of: an RSN capability common to the at least one setup link, an RSNE capability common to the at least one setup link, an extended RSNE capability common to the at least one setup link, or an RSN extended element capability common to the at least one setup link.

Optionally, the link common operation is indicated by at least one of: an AKM suite selector common to the at least one setup link, or a pairwise cipher suite common to the at least one setup link.

Optionally, the first determining unit 1301 is further configured to determine whether the at least one requested link supports the link common capability and/or whether the at least one affiliated STA supports the link common operation.

Optionally, the apparatus 1200 for multi-link reconfiguration further includes a first transceiver unit. The first transceiver unit is configured to receive STA information of at least one second affiliated STA. The STA information of the at least one second affiliated STA indicates the link capability of the at least one requested link and/or the operational requirement of the at least one first affiliated STA. The at least one second affiliated STA includes a new affiliated STA of the second MLD and/or an affiliated STA of the second MLD for which no link is set up with the first MLD.

Optionally, the STA information of the at least one second affiliated STA is carried in a beacon frame or a probe response frame.

Optionally, the first transceiver unit is further configured to transmit a first request frame to the second MLD and/or receive a first response frame transmitted by the second MLD, if the link capability of the at least one requested link is compatible with the link common capability and/or the operational requirement of the at least one first affiliated STA is compatible with the link common operation, where the first request frame is used for requesting to add the at least one requested link in multi-link reconfiguration, and the first response frame is used for adding the at least one requested link in multi-link reconfiguration.

Optionally, the first determining unit 1301 is further configured to determine not to transmit the first request frame to the second MLD, when the link capability of the at least one requested link is incompatible with the link common capability and/or the operational requirement of the at least one first affiliated STA is incompatible with the link common operation.

Optionally, the first transceiver unit is further configured to transmit a first request frame to the second MLD and/or receive a first response frame transmitted by the second MLD, if the first MLD fails to determine whether the link capability of the at least one requested link is compatible with the link common capability and/or whether the operational requirement of the at least one first affiliated STA is compatible with the link common operation. The first request frame is used for requesting to add the at least one requested link in multi-link reconfiguration, and the first request frame contains link capability information of the at least one requested link and/or operational information of the at least one first affiliated STA. The first response frame indicates failure of addition of a target requested link if the target requested link exists in the at least one requested link, and the target requested link is a requested link among the at least one requested link having a link capability incompatible with the link common capability and/or corresponding to at least one first affiliated STA having an operational requirement incompatible with the link common operation.

Optionally, the first transceiver unit is further configured to perform at least one of: transmitting the first request frame and/or receiving the first response frame on one of the at least one setup link, or transmitting the first request frame and/or receiving the first response frame on one of the at least one requested link.

Optionally, the first request frame includes a first multi-link element, and the first multi-link element includes a first common information field and/or a first link information field. The first common information field indicates information that is common to the at least one requested link and the at least one setup link. The first link information field indicates link information of the at least one requested link and/or link information of at least one first setup link, where the at least one first setup link is a link associated with the at least one requested link in the at least one setup link.

Optionally, the first common information field includes at least one of: MLD MAC address information of the first MLD, first common capability information, or first common operational information. The first common capability information indicates a capability that is common to the at least one setup link and the at least one requested link. The first common operational information indicates an operation that is common to the at least one setup link and the at least one requested link.

Optionally, the first common capability information includes at least one of: an MLD capability of the first MLD, an EML capability of the first MLD, an RSN capability, an RSNE capability, an extended RSNE capability, or an RSN extended element capability.

Optionally, the first link information field contains STA information of an affiliated STA of the first MLD associated with each of the at least one requested link and/or each of the at least one first setup link.

Optionally, the STA information is carried in a first per-STA profile subelement, and the first per-STA profile subelement includes at least one of: a first subelement ID subfield, a first length subfield, a first STA control subfield, a first STA information subfield, or a first STA profile subfield. The first subelement ID subfield indicates a subelement ID of the first per-STA profile subelement. The first length subfield indicates a length of the first per-STA profile subelement. The first STA control subfield indicates STA control information. The first STA information subfield indicates STA information. The first STA profile subfield indicates STA profile information.

Optionally, the first STA control subfield includes a link ID subfield, where the link ID subfield indicates an ID of a corresponding link for an affiliated STA of the second MLD.

Optionally, the first request frame further includes a first transmitter STA information field, where the first transmitter STA information field indicates STA information of an affiliated STA of the first MLD associated with a link for transmitting the first request frame.

Optionally, if the first request frame is to be transmitted on a first requested link which is one of the at least one requested link, the first request frame further contains link capability information and/or an operational parameter of the first requested link, where the link capability information indicates a link capability, and the operational parameter indicates operational information of a corresponding affiliated STA.

Optionally, the link capability information and/or the operational information of the first requested link is carried in at least one of: a frame body of the first request frame, or the first link information field in the first multi-link element.

Optionally, if the at least one requested link is multiple requested links, the first multi-link element includes the first common information field and the first link information field. The first link information field includes a first per-STA profile subelement of each second requested link, where the second requested link is a link other than the first requested link in the at least one requested link. For each second requested link, link capability information and/or an operational parameter of the second requested link is carried in a first per-STA profile subelement of the second requested link.

Optionally, the first request frame is a new-link association request frame, and the new-link association request frame is used for requesting to add the first requested link for transmitting the first request frame and/or the second requested link after completion of multi-link setup.

Optionally, if the first request frame is to be transmitted on one of the at least one setup link, the first multi-link element includes the first common information field and the first link information field. For each of the at least one requested link, link capability information and/or an operational parameter of the requested link is carried in a first per-STA profile subelement of the requested link in the first link information field.

Optionally, the first request frame is an addition request frame, and the addition request frame is used for requesting to add the at least one requested link after completion of multi-link setup.

Optionally, the link capability information of each of the at least one requested link includes at least one of: an RSN capability, an RSNE capability, an extended RSNE capability, or an RSN extended element capability.

Optionally, in the at least one requested link, link capability information of different requested links is the same as common capability information of the at least one setup link, and/or operational parameters of different requested links are the same as common operational information of the at least one setup link.

Optionally, the first request frame further includes: an RSNE and/or an RSN extended element corresponding to each of the at least one requested link, where each RSNE contains at least part of capability information and/or an operational parameter of a requested link corresponding to the RSNE, and each RSN extended element contains at least part of capability information and/or an operational parameter of a requested link corresponding to the RSN extended element.

Optionally, if the first MLD supports multi-link operation and the first MLD and the second MLD have completed multi-link setup, the first request frame includes the first multi-link element. If the first MLD supports multi-link operation but the first MLD and the second MLD have not completed multi-link setup, the first request frame includes a basic multi-link element. If the first MLD does not support multi-link operation, the first request frame does not include the first multi-link element and the basic multi-link element.

Optionally, the first multi-link element is a first addition reconfiguration multi-link element, and the first addition reconfiguration multi-link element is used for adding the at least one requested link after completion of multi-link setup.

Optionally, the first response frame includes a second multi-link element, and the second multi-link element includes a second common information field and/or a second link information field. The second common information field indicates information that is common to the at least one requested link and the at least one setup link. The second link information field indicates link information of the at least one requested link and/or link information of at least one first setup link, where the first setup link is a link associated with the at least one requested link in the at least one setup link.

Optionally, the second common information field includes at least one of: MLD MAC address information of the second MLD, second common capability information, second common operational information, a BSS parameter change count subfield, or a link ID. The second common capability information indicates a capability common to the at least one setup link and the at least one requested link. The second common operational information indicates an operation common to the at least one setup link and the at least one requested link. The BSS parameter change count subfield is used for counting a critical update to a BSS parameter. The link ID indicates a link ID of a link for transmitting the first response frame.

Optionally, the second common capability information includes at least one of: an MLD capability of the second MLD, an EML capability of the second MLD, an RSN capability, an RSNE capability, an extended RSNE capability, or an RSN extended element capability.

Optionally, the second link information field contains STA information of an affiliated STA of the second MLD associated with each of the at least one requested link and/or each of the at least one first setup link, where the first setup link is a link associated with the at least one requested link in the at least one setup link.

Optionally, the STA information is carried in a second per-STA profile subelement, and the second per-STA profile subelement includes at least one of: a second subelement ID subfield, a second length subfield, a second STA control subfield, a second STA information subfield, or a second STA profile subfield. The second subelement ID subfield indicates a subelement ID of the second per-STA profile subelement. The second length subfield indicates a length of the second per-STA profile subelement. The second STA control subfield indicates STA control information. The second STA information subfield indicates STA information. The second STA profile subfield indicates STA profile information.

Optionally, the first response frame further includes a second transmitter STA information field, and the second transmitter STA information field indicates STA information of an affiliated STA of the second MLD associated with a link for transmitting the first response frame.

Optionally, if the first response frame is to be transmitted on a third requested link which is one of the at least one requested link, the first response frame further includes a status code field, where the status code field indicates a setup result of the third requested link.

Optionally, if the third requested link is accepted by the second MLD, the status code field indicates success of addition of the third requested link. If the third requested link is rejected by the second MLD, the status code field indicates failure of link addition of the third requested link and/or a reason for the failure.

Optionally, if a link capability of the third requested link is incompatible with the link common capability and/or an operational requirement of a first affiliated STA corresponding to the third requested link is incompatible with the link common operation, the status code field indicates that the reason for the failure of the third requested link is: the link capability of the third requested link is incompatible with the link common capability and/or the operational requirement of the first affiliated STA corresponding to the third requested link is incompatible with the link common operation.

Optionally, the status code field of the third requested link is carried in at least one of: a frame body of the first response frame, or the second link information field in the second multi-link element.

Optionally, if the at least one requested link is multiple requested links, the second multi-link element includes the second common information field and the second link information field. The second link information includes a second per-STA profile subelement of each fourth requested link, where the fourth requested link is a requested link other than the third requested link in the at least one requested link. For each fourth requested link, a second per-STA profile subelement of the fourth requested link further includes a status code subfield of the fourth requested link, where the status code subfield of the fourth requested link indicates a setup result of the corresponding fourth requested link.

Optionally, a status code subfield of a fourth requested link accepted by the second MLD indicates success of link addition. A status code subfield of a fourth requested link rejected by the second MLD indicates failure of link addition and/or a reason for the failure.

Optionally, if the link capability of the third requested link is incompatible with the link common capability and/or the operational requirement of the first affiliated STA corresponding to the third requested link is incompatible with the link common operation, the status code subfield of each fourth requested link indicates failure of link addition, and/or the status code subfield of each fourth requested link indicates that a reason for the failure is: setup failure of the third requested link.

Optionally, the first response frame is a new-link association response frame, and the new-link association response frame is used for at least one of the following: adding or rejecting the third requested link for transmitting the first response frame in multi-link reconfiguration; or adding or rejecting the fourth requested link in multi-link reconfiguration.

Optionally, if a link for transmitting the first response frame is one of the at least one setup link, the second multi-link element includes the second common information field and the second link information field. For each of the at least one requested link, a setup result of the requested link is indicated by a status code subfield in a second per-STA profile subelement of the requested link in the second link information field. A status code subfield of a requested link accepted by the second MLD indicates success of link addition, and a status code subfield of a requested link rejected by the second MLD indicates failure of link addition and/or a reason for the failure.

Optionally, for a requested link having a link capability incompatible with the link common capability and/or corresponding to a first affiliated STA having an operational requirement incompatible with the link common operation, a status code subfield of the requested link indicates failure of link addition and/or indicates that a reason for the failure is: the link capability is incompatible with the link common capability and/or the operational requirement of the first affiliated STA is incompatible with the link common operation.

Optionally, the first response frame is an addition response frame, and the addition response frame is used for adding or rejecting the at least one requested link after completion of multi-link setup.

Optionally, if the second MLD supports multi-link operation and the second MLD and the first MLD have completed multi-link setup, the first response frame includes the second multi-link element. If the second MLD supports multi-link operation but the second MLD and the first MLD have not completed multi-link setup, the first response frame includes a basic multi-link element. If the second MLD does not support multi-link operation, the first response frame does not includes the second multi-link element and the basic multi-link element.

Optionally, the second multi-link element is a second addition reconfiguration multi-link element, where the second addition reconfiguration multi-link element is used for adding the at least one requested link after completion of multi-link setup.

Optionally, a link for transmitting the first request frame is the same as a link for receiving the first response frame.

Optionally, the apparatus 1200 for multi-link reconfiguration further includes a first security authentication unit. The first security authentication unit is configured to perform security authentication for at least one new link and the at least one setup link, or perform security authentication for the at least one new link with the second MLD, after adding the at least one new link, where the at least one new link is a link that is successfully set up among the at least one requested link and is some or all of the at least one requested link.

Optionally, the first security authentication unit is further configured to perform security authentication for the at least one new link and the at least one setup link with the second MLD if the first MLD is in a first state, where the first state indicates that security authentication of at least some of the at least one setup link is not completed.

Optionally, the first security authentication unit is further configured to perform security authentication for the at least one new link with the second MLD if the first MLD is in a second state, where the second state indicates that security authentication of all the at least one setup link is completed.

Optionally, a first-part transmission parameter applied to the at least one new link is the same as a first-part parameter applied to the at least one setup link, and/or the at least one new link is re-setup by using a second-part parameter.

Optionally, the first-part parameter includes at least one of: a PTK or an AID.

Optionally, the second-part parameter includes at least one of: a GTK, an IGTK, or a BIGTK.

Optionally, the first security authentication unit is further configured to exchange a handshake message with the second MLD, where the exchange of the handshake message is used for generating a second-part transmission parameter for the at least one new link.

Optionally, the first transceiver unit is further configured to: receive a first handshake message transmitted by the second MLD, where the first handshake message is used for confirming whether the first-part transmission parameter is applied to the at least one new link; transmit a second handshake message to the second MLD, where the second handshake message is used for synchronizing or confirming the first-part transmission parameter applied to the at least one new link; receive a third handshake message transmitted by the second MLD, where the third handshake message indicates a second-part transmission parameter applied to each of the at least one new link; and transmit a fourth handshake message to the second MLD, where the fourth handshake message is used for confirming a second-part transmission parameter applied to each new link that is successfully set up.

Optionally, the first handshake message and the second handshake message do not contain a nonce for generating the first-part transmission parameter.

Optionally, the second handshake message contains link information of each of the at least one new link.

Optionally, the third handshake message contains at least one of: the link information of each of the at least one new link, a GTK of each new link, an IGTK of each new link, or a BIGTK of each new link.

Optionally, the handshake message comprises two group handshake message, and the first transceiver unit is further configured to: receive a first group handshake message transmitted by the second MLD, where the first group handshake message indicates a second-part transmission parameter applied to each of the at least one new link; and transmit a second group handshake message to the second MLD, where the second group handshake message is used for confirming a second-part transmission parameter applied to each new link that is successfully set up.

Optionally, the at least one requested link and the at least one setup link use different nonoverlapping channels, different requested links use different nonoverlapping channels, and different setup links use different nonoverlapping channels.

Optionally, the first MLD is a non-AP MLD, and the second MLD is a non-AP MLD or an AP MLD.

It should be understood by those skilled in the art that, for related elaborations of the foregoing apparatus 1300 for multi-link reconfiguration in embodiments of the disclosure, reference can be made to the related elaborations of the method for multi-link reconfiguration in embodiments of the disclosure for understanding.

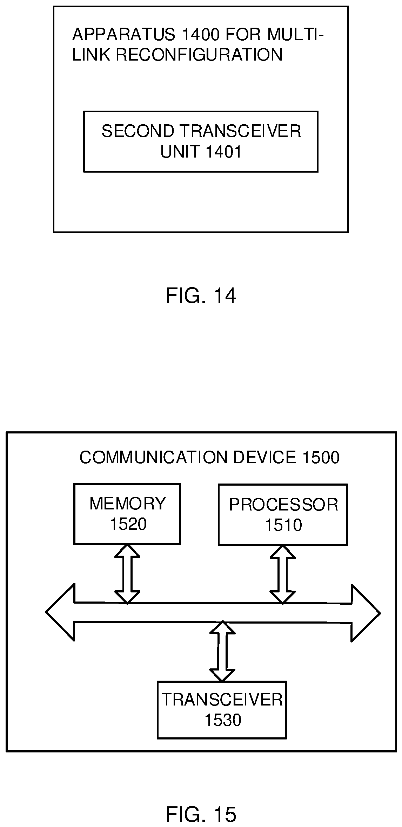

FIG. 14 is schematic structural diagram II of an apparatus for multi-link reconfiguration according to an embodiment of the disclosure. The apparatus is applied to a second MLD. As illustrated in FIG. 14, the apparatus 1400 for multi-link reconfiguration includes a second transceiver unit 1401. The second transceiver unit 1401 is configured to receive a first request frame transmitted by a first MLD and/or transmit a first response frame to the first MLD, where the first request frame is used for requesting to add at least one requested link in multi-link reconfiguration, and the first response frame is used for adding the at least one requested link in multi-link reconfiguration.

Optionally, the first request frame contains link capability information of the at least one requested link and/or operational information of at least one first affiliated STA, and the at least one first affiliated STA is an affiliated STA of the first MLD associated with the at least one requested link.

Optionally, the second MLD determines whether a link capability of the at least one requested link is compatible with a link common capability and/or whether an operational requirement of the at least one first affiliated STA is compatible with a link common operation, where the link capability of the at least one requested link is determined according to the link capability information of the at least one requested link, and/or the operational requirement of the at least one first affiliated STA is determined according to the operational information of the at least one first affiliated STA.

Optionally, the link common capability includes at least one of: an RSN capability common to at least one setup link, an RSNE capability common to the at least one setup link, an extended RSNE capability common to the at least one setup link, or an RSN extended element capability common to the at least one setup link.

Optionally, the link common operation is indicated by at least one of: an AKM suite selector common to the at least one setup link, or a pairwise cipher suite common to the at least one setup link.

Optionally, the first response frame indicates failure of addition of a target requested link if the target requested link exists in the at least one requested link, and the target requested link is a requested link among the at least one requested link having a link capability incompatible with the link common capability and/or corresponding to at least one first affiliated STA having an operational requirement incompatible with the link common operation.

Optionally, the second transceiver unit 1401 is further configured to transmit STA information of at least one second affiliated STA to the first MLD. The STA information of the at least one second affiliated STA indicates the link capability of the at least one requested link and/or the operational requirement of the at least one first affiliated STA. The at least one second affiliated STA includes a new affiliated STA of the second MLD and/or an affiliated STA of the second MLD for which no link is set up with the first MLD.

Optionally, the STA information of the at least one second affiliated STA is carried in a beacon frame or a probe response frame.

Optionally, the second transceiver unit 1401 is further configured to receive the first request frame and/or transmit the first response frame on one of the at least one setup link; or receive the first request frame and/or transmit the first response frame on one of the at least one requested link.

Optionally, the first request frame includes a first multi-link element, and the first multi-link element includes a first common information field and/or a first link information field. The first common information field indicates information that is common to the at least one requested link and the at least one setup link. The first link information field indicates link information of the at least one requested link and/or link information of at least one first setup link, where the at least one first setup link is a link associated with the at least one requested link in the at least one setup link.

Optionally, the first common information field includes at least one of: MLD MAC address information of the first MLD, first common capability information, or first common operational information. The first common capability information indicates a capability that is common to the at least one setup link and the at least one requested link. The first common operational information indicates an operation that is common to the at least one setup link and the at least one requested link.

Optionally, the first common capability information includes at least one of: an MLD capability of the first MLD, an EML capability of the first MLD, an RSN capability, an RSNE capability, an extended RSNE capability, or an RSN extended element capability.

Optionally, the first link information field contains STA information of an affiliated STA of the first MLD associated with each of the at least one requested link and/or each of the at least one first setup link.

Optionally, the STA information is carried in a first per-STA profile subelement, and the first per-STA profile subelement includes at least one of: a first subelement ID subfield, a first length subfield, a first STA control subfield, a first STA information subfield, or a first STA profile subfield. The first subelement ID subfield indicates a subelement ID of the first per-STA profile subelement. The first length subfield indicates a length of the first per-STA profile subelement. The first STA control subfield indicates STA control information. The first STA information subfield indicates STA information. The first STA profile subfield indicates STA profile information.

Optionally, the first STA control subfield includes a link ID subfield, where the link ID subfield indicates an ID of a corresponding link for an affiliated STA of the second MLD.

Optionally, the first request frame further includes a first transmitter STA information field, where the first transmitter STA information field indicates STA information of an affiliated STA of the first MLD associated with a link for transmitting the first request frame.

Optionally, if the first request frame is to be transmitted on a first requested link which is one of the at least one requested link, the first request frame further contains link capability information and/or an operational parameter of the first requested link, where the link capability information indicates a link capability, and the operational parameter indicates operational information of a corresponding affiliated STA.

Optionally, the link capability information and/or the operational information of the first requested link is carried in at least one of: a frame body of the first request frame, or the first link information field in the first multi-link element.

Optionally, if the at least one requested link is multiple requested links, the first multi-link element includes the first common information field and the first link information field. The first link information field includes a first per-STA profile subelement of each second requested link, where the second requested link is a link other than the first requested link in the at least one requested link. For each second requested link, link capability information and/or an operational parameter of the second requested link is carried in a first per-STA profile subelement of the second requested link.

Optionally, the first request frame is a new-link association request frame, and the new-link association request frame is used for requesting to add the first requested link for transmitting the first request frame and/or the second requested link after completion of multi-link setup.

Optionally, if the first request frame is to be transmitted on one of the at least one setup link, the first multi-link element includes the first common information field and the first link information field. For each of the at least one requested link, link capability information and/or an operational parameter of the requested link is carried in a first per-STA profile subelement of the requested link in the first link information field.

Optionally, the first request frame is an addition request frame, and the addition request frame is used for requesting to add the at least one requested link after completion of multi-link setup.

Optionally, the link capability information of each of the at least one requested link includes at least one of: an RSN capability, an RSNE capability, an extended RSNE capability, or an RSN extended element capability.

Optionally, in the at least one requested link, link capability information of different requested links is the same as common capability information of the at least one setup link, and/or operational parameters of different requested links are the same as common operational information of the at least one setup link.

Optionally, the first request frame further includes: an RSNE and/or an RSN extended element corresponding to each of the at least one requested link, where each RSNE contains at least part of capability information and/or an operational parameter of a requested link corresponding to the RSNE, and each RSN extended element contains at least part of capability information and/or an operational parameter of a requested link corresponding to the RSN extended element.

Optionally, if the first MLD supports multi-link operation and the first MLD and the second MLD have completed multi-link setup, the first request frame includes the first multi-link element. If the first MLD supports multi-link operation but the first MLD and the second MLD have not completed multi-link setup, the first request frame includes a basic multi-link element. If the first MLD does not support multi-link operation, the first request frame does not include the first multi-link element and the basic multi-link element.

Optionally, the first multi-link element is a first addition reconfiguration multi-link element, and the first addition reconfiguration multi-link element is used for adding the at least one requested link after completion of multi-link setup.

Optionally, the first response frame includes a second multi-link element, and the second multi-link element includes a second common information field and/or a second link information field. The second common information field indicates information that is common to the at least one requested link and the at least one setup link. The second link information field indicates link information of the at least one requested link and/or link information of at least one first setup link, where the first setup link is a link associated with the at least one requested link in the at least one setup link.

Optionally, the second common information field includes at least one of: MLD MAC address information of the second MLD, second common capability information, second common operational information, a BSS parameter change count subfield, or a link ID. The second common capability information indicates a capability common to the at least one setup link and the at least one requested link. The second common operational information indicates an operation common to the at least one setup link and the at least one requested link. The BSS parameter change count subfield is used for counting a critical update to a BSS parameter. The link ID indicates a link ID of a link for transmitting the first response frame.

Optionally, the second common capability information includes at least one of: an MLD capability of the second MLD, an EML capability of the second MLD, an RSN capability, an RSNE capability, an extended RSNE capability, or an RSN extended element capability.

Optionally, the second link information field contains STA information of an affiliated STA of the second MLD associated with each of the at least one requested link and/or each of the at least one first setup link, where the first setup link is a link associated with the at least one requested link in the at least one setup link.

Optionally, the STA information is carried in a second per-STA profile subelement, and the second per-STA profile subelement includes at least one of: a second subelement ID subfield, a second length subfield, a second STA control subfield, a second STA information subfield, or a second STA profile subfield. The second subelement ID subfield indicates a subelement ID of the second per-STA profile subelement. The second length subfield indicates a length of the second per-STA profile subelement. The second STA control subfield indicates STA control information. The second STA information subfield indicates STA information. The second STA profile subfield indicates STA profile information.

Optionally, the first response frame further includes a second transmitter STA information field, and the second transmitter STA information field indicates STA information of an affiliated STA of the second MLD associated with a link for transmitting the first response frame.

Optionally, if the first response frame is to be transmitted on a third requested link which is one of the at least one requested link, the first response frame further includes a status code field, where the status code field indicates a setup result of the third requested link.

Optionally, if the third requested link is accepted by the second MLD, the status code field indicates success of addition of the third requested link. If the third requested link is rejected by the second MLD, the status code field indicates failure of link addition of the third requested link and/or a reason for the failure.

Optionally, if a link capability of the third requested link is incompatible with the link common capability and/or an operational requirement of a first affiliated STA corresponding to the third requested link is incompatible with the link common operation, the status code field indicates that the reason for the failure of the third requested link is: the link capability of the third requested link is incompatible with the link common capability and/or the operational requirement of the first affiliated STA corresponding to the third requested link is incompatible with the link common operation.

Optionally, the status code field of the third requested link is carried in at least one of: a frame body of the first response frame, or the second link information field in the second multi-link element.

Optionally, if the at least one requested link is multiple requested links, the second multi-link element includes the second common information field and the second link information field. The second link information includes a second per-STA profile subelement of each fourth requested link, where the fourth requested link is a requested link other than the third requested link in the at least one requested link. For each fourth requested link, a second per-STA profile subelement of the fourth requested link further includes a status code subfield of the fourth requested link, where the status code subfield of the fourth requested link indicates a setup result of the corresponding fourth requested link.

Optionally, a status code subfield of a fourth requested link accepted by the second MLD indicates success of link addition. A status code subfield of a fourth requested link rejected by the second MLD indicates failure of link addition and/or a reason for the failure.

Optionally, if the link capability of the third requested link is incompatible with the link common capability and/or the operational requirement of the first affiliated STA corresponding to the third requested link is incompatible with the link common operation, the status code subfield of each fourth requested link indicates failure of link addition, and/or the status code subfield of each fourth requested link indicates that a reason for the failure is: setup failure of the third requested link.

Optionally, the first response frame is a new-link association response frame, and the new-link association response frame is used for at least one of the following: adding or rejecting the third requested link for transmitting the first response frame in multi-link reconfiguration; or adding or rejecting the fourth requested link in multi-link reconfiguration.

Optionally, if a link for transmitting the first response frame is one of the at least one setup link, the second multi-link element includes the second common information field and the second link information field. For each of the at least one requested link, a setup result of the requested link is indicated by a status code subfield in a second per-STA profile subelement of the requested link in the second link information field. A status code subfield of a requested link accepted by the second MLD indicates success of link addition, and a status code subfield of a requested link rejected by the second MLD indicates failure of link addition and/or a reason for the failure.

Optionally, for a requested link having a link capability incompatible with the link common capability and/or corresponding to a first affiliated STA having an operational requirement incompatible with the link common operation, a status code subfield of the requested link indicates failure of link addition and/or indicates that a reason for the failure is: the link capability is incompatible with the link common capability and/or the operational requirement of the first affiliated STA is incompatible with the link common operation.

Optionally, the first response frame is an addition response frame, and the addition response frame is used for adding or rejecting the at least one requested link after completion of multi-link setup.

Optionally, if the second MLD supports multi-link operation and the second MLD and the first MLD have completed multi-link setup, the first response frame includes the second multi-link element. If the second MLD supports multi-link operation but the second MLD and the first MLD have not completed multi-link setup, the first response frame includes a basic multi-link element. If the second MLD does not support multi-link operation, the first response frame does not includes the second multi-link element and the basic multi-link element.

Optionally, the second multi-link element is a second addition reconfiguration multi-link element, where the second addition reconfiguration multi-link element is used for adding the at least one requested link after completion of multi-link setup.

Optionally, a link for transmitting the first request frame is the same as a link for receiving the first response frame.

Optionally, the apparatus further includes a second authentication unit. The second authentication unit is configured for the second MLD to perform security authentication for at least one new link and the at least one setup link, or perform security authentication for the at least one new link with the first MLD, after adding the at least one new link, where the at least one new link is a link that is successfully set up among the at least one requested link and is some or all of the at least one requested link.

Optionally, the apparatus further includes a second authentication unit. The second authentication unit is further configured to perform security authentication for the at least one new link and the at least one setup link with the first MLD if the first MLD is in a first state, where the first state indicates that security authentication of at least some of the at least one setup link is not completed.

Optionally, the second authentication unit is further configured to perform security authentication for the at least one new link with the first MLD if the first MLD is in a second state, where the second state indicates that security authentication of all the at least one setup link is completed.

Optionally, a first-part transmission parameter applied to the at least one new link is the same as a first-part parameter applied to the at least one setup link, and/or the at least one new link is re-setup by using a second-part parameter.

Optionally, the first-part parameter includes at least one of: a PTK or an AID.

Optionally, the second-part parameter includes at least one of: a GTK, an IGTK, or a BIGTK.

Optionally, the second authentication unit is further configured to exchange a handshake message with the first MLD, where the exchange of the handshake message is used for generating a second-part transmission parameter for the at least one new link.

Optionally, the handshake message includes 4-way handshake messages. In terms of exchanging, by the second MLD, the handshake message with the first MLD, the second transceiver unit 1401 is further configured to: transmit a first handshake message to the first MLD, where the first handshake message is used for confirming whether the first-part transmission parameter is applied to the at least one new link; receive a second handshake message transmitted by the first MLD, where the second handshake message is used for synchronizing or confirming the first-part transmission parameter applied to the at least one new link; transmit a third handshake message to the first MLD, where the third handshake message indicates a second-part transmission parameter applied to each of the at least one new link; and receive a fourth handshake message transmitted by the first MLD, where the fourth handshake message is used for confirming a second-part transmission parameter applied to each new link that is successfully set up.

Optionally, the first handshake message and the second handshake message do not contain a nonce for generating the first-part transmission parameter.

Optionally, the second handshake message contains link information of each of the at least one new link.

Optionally, the third handshake message contains at least one of: the link information of each of the at least one new link, a GTK of each new link, an IGTK of each new link, or a BIGTK of each new link.

Optionally, the handshake message includes two group handshake messages, and the second MLD exchanges the handshake message with the first MLD as follows. The second MLD transmits a first group handshake message to the first MLD, where the first group handshake message indicates a second-part transmission parameter applied to each of the at least one new link. The second MLD receives a second group handshake message transmitted by the first MLD, where the second group handshake message is used for confirming a second-part transmission parameter applied to each new link that is successfully set up.

Optionally, the at least one requested link and the at least one setup link use different nonoverlapping channels, different requested links use different nonoverlapping channels, and different setup links use different nonoverlapping channels.

Optionally, the first MLD is a non-AP MLD, and the second MLD is a non-AP MLD or an AP MLD.

FIG. 15 is a schematic structural diagram of a communication device 1400 provided in embodiments of the disclosure. The communication device can be an AP MLD or a non-AP MLD. The communication device 1500 illustrated in FIG. 15 includes a processor 1510. The processor 1510 can invoke and execute computer programs stored in a memory, to implement the method in embodiments of the disclosure.

Optionally, as illustrated in FIG. 15, the communication device 1500 can further include a memory 1520. The processor 1510 can invoke and execute computer programs from the memory 1520, so as to implement the method in embodiments of the disclosure.

The memory 1520 can be a separate component independent of the processor 1510, or can be integrated into the processor 1410.

Optionally, as illustrated in Fig. 15, the communication device 1400 can further include a transceiver 1530. The processor 1510 can control the transceiver 1530 to communicate with other devices, and specifically, can send information or data to the other devices or receive information or data sent by the other devices.

The transceiver 1530 can include a transmitter and a receiver. The transceiver 1530 can further include an antenna, where one or more antennas can be provided.

Optionally, the communication device 1500 can specifically be the first MLD in embodiments of the disclosure, and the communication device 1500 can implement corresponding processes implemented by the first MLD in various methods in embodiments of the disclosure, which will not be described again herein for brevity.

Optionally, the communication device 1500 can specifically be the second MLD in embodiments of the disclosure, and the communication device 1500 can implement corresponding processes implemented by the second MLD in various methods in embodiments of the disclosure, which will not be described again herein for brevity.

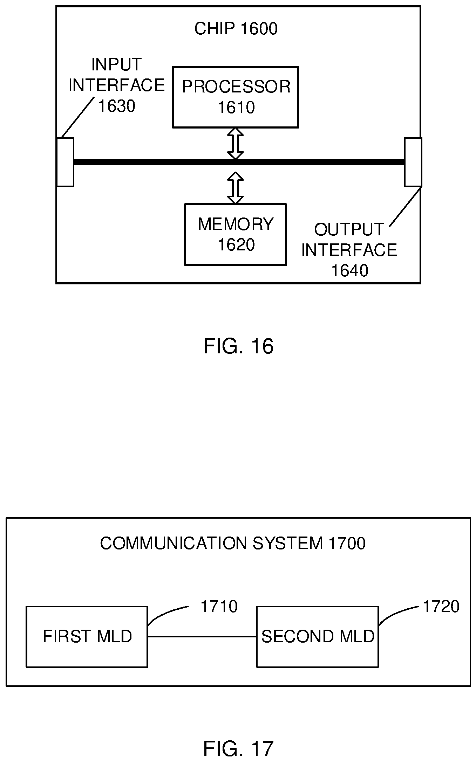

FIG. 16 is a schematic structural diagram of a chip according to embodiments of the disclosure. The chip 1600 illustrated in FIG. 16 includes a processor 1610. The processor 1610 can invoke and execute computer programs stored in a memory, so as to implement the method in embodiments of the disclosure.

Optionally, as illustrated in FIG. 16, the chip 1500 can further include a memory 1620, where the processor 1610 can invoke and execute computer programs from the memory 1620 to implement the method in embodiments of the disclosure.

The memory 1620 can be a separate component independent of the processor 1610, or can be integrated into the processor 1510.

Optionally, the chip 1600 can further include an input interface 1630. The processor 1610 can control the input interface 1630 to communicate with other devices or chips, and specifically, can obtain information or data sent by other devices or chips.

Optionally, the chip 1600 can further include an output interface 1640. The processor 1610 can control the output interface 1640 to communicate with other devices or chips, and specifically, can output information or data to other devices or chips.

Optionally, the chip can be applied to the first MLD in embodiments of the disclosure, and the chip can implement corresponding processes implemented by the first MLD in various methods in embodiments of the disclosure, which will not be described again herein for brevity.

Optionally, the chip can be applied to the second MLD in embodiments of the disclosure, and the chip can implement corresponding processes implemented by the second MLD in various methods in embodiments of the disclosure, which will not be described again herein for brevity.

It should be understood that, the chip in embodiments of the disclosure can also be referred to as a system-on-chip (SoC) or the like.

FIG. 17 is a schematic block diagram of a communication system 1700 provided in embodiments of the disclosure. As illustrated in FIG. 17, the communication system 1700 includes a first MLD 1710 and a second MLD 1720.

The first MLD 1710 can be configured to implement corresponding functions implemented by the first MLD in the foregoing method, and the second MLD 1720 can be configured to implement corresponding functions implemented by the second MLD in the foregoing method, which will not be described again herein for brevity.

It should be understood that, the processor in embodiments of the disclosure can be an integrated circuit chip with signal processing capabilities. During implementation, each step of the foregoing method embodiments can be completed by an integrated logic circuit of hardware in the processor or an instruction in the form of software. The processor can be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor can be a microprocessor, or the processor can be any conventional processor or the like. The steps of the method disclosed in embodiments of the disclosure can be directly implemented by a hardware decoding processor, or can be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in embodiments of the disclosure can be a volatile memory or a non-volatile memory, or can include both the volatile memory and the non-volatile memory. The non-volatile memory can be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It should be understood that, the memory above is intended for illustration rather than limitation. For example, the memory in embodiments of the disclosure can also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

Embodiments of the disclosure further provide a computer-readable storage medium. The computer-readable storage medium is configured to store computer programs.

Optionally, the computer-readable storage medium can be applied to an AP MLD in embodiments of the disclosure, and the computer programs are operable with a computer to implement corresponding processes implemented by the AP MLD in various methods in embodiments of the disclosure, which will not be described again herein for brevity.

Optionally, the computer-readable storage medium can be applied to a non-AP MLD in embodiments of the disclosure, and the computer programs are operable with a computer to implement corresponding processes implemented by the non-AP MLD in various methods in embodiments of the disclosure, which will not be described again herein for brevity.

Embodiments of the disclosure further provide a computer program product. The computer program product includes computer program instructions.

Optionally, the computer program product can be applied to the AP MLD in embodiments of the disclosure, and the computer program instructions are operable with a computer to implement corresponding processes implemented by the AP MLD in various methods in embodiments of the disclosure, which will not be described again herein for brevity.

Optionally, the computer program product can be applied to a non-AP MLD in embodiments of the disclosure, and the computer program instructions are operable with a computer to implement corresponding processes implemented by the non-AP MLD in various methods in embodiments of the disclosure, which will not be described again herein for brevity.

Embodiments of the disclosure further provide a computer program.

Optionally, the computer program can be applied to an AP MLD in embodiments of the disclosure. The computer program, when executed by a computer, is operable with the computer to implement corresponding processes implemented by the AP MLD in various methods in embodiments of the disclosure, which will not be described again herein for brevity.

Optionally, the computer program can be applied to a non-AP MLD in embodiments of the disclosure. The computer program, when executed by a computer, is operable with the computer to implement corresponding processes implemented by the non-AP MLD in various methods in embodiments of the disclosure, which will not be described again herein for brevity.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art can use different methods with regard to each particular application to implement the described functionality, but such methods should not be regarded as lying beyond the scope of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure can also be implemented in various other manners. For example, the above apparatus embodiments are merely illustrative, e.g., the division of units is only a division of logical functions, and other manners of division can be available in practice, e.g., multiple units or assemblies can be combined or can be integrated into another system, or some features can be ignored or skipped. In other respects, the coupling or direct coupling or communication connection as illustrated or discussed can be an indirect coupling or communication connection through some interface, device, or unit, and can be electrical, mechanical, or otherwise.

Separated units as illustrated may or may not be physically separated. Components displayed as units may or may not be physical units, and can reside at one location or can be distributed to multiple networked units. Some or all of the units can be selectively adopted according to practical needs to achieve desired objectives of the disclosure.

In addition, various functional units described in various embodiments of the disclosure can be integrated into one first processing unit or can be present as a number of physically separated units, and two or more units can be integrated into one.

If the functions are implemented as software functional units and sold or used as standalone products, they can be stored in a computer-readable storage medium. Based on such an understanding, the essential technical solution, or the portion that contributes to the related art, or part of the technical solution of the disclosure can be embodied as software products. The computer software products can be stored in a storage medium and can include multiple instructions that, when executed, can cause a computer device, e.g., a personal computer, a server, a network device, etc., to execute some or all operations of the methods described in various embodiments of the disclosure. The above storage medium can include various kinds of media that can store program codes, such as a universal serial bus (USB) flash disk, a mobile hard drive, a ROM, a RAM, a magnetic disk, or an optical disk.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for multi-link reconfiguration, comprising:
when a first multi-link device (MLD) and a second MLD have completed multi-link setup and set up at least one setup link, determining, by the first MLD, whether a link capability of at least one requested link is compatible with a link common capability and/or whether an operational requirement of at least one first affiliated station (STA) is compatible with a link common operation, wherein
the at least one first affiliated STA is an affiliated STA of the first MLD associated with the at least one requested link, the link common capability refers to a capability common to the at least one setup link, and the link common operation refers to an operation common to the at least one setup link.

2. The method of claim 1, wherein the link common capability comprises at least one of:
a robust security network (RSN) capability common to the at least one setup link;
a robust security network element (RSNE) capability common to the at least one setup link;
an extended RSNE capability common to the at least one setup link; or
an RSN extended element capability common to the at least one setup link.

3. The method of claim 1 or 2, wherein the link common operation is indicated by at least one of:
an authentication and key management (AKM) suite selector common to the at least one setup link; or
a pairwise cipher suite common to the at least one setup link.

4. The method of any of claims 1 to 3, wherein determining, by the first MLD, whether the link capability of the at least one requested link is compatible with the link common capability and/or whether the operational requirement of the at least one first affiliated STA is compatible with the link common operation comprises:
determining, by the first MLD, whether the at least one requested link supports the link common capability and/or whether the at least one affiliated STA supports the link common operation.

5. The method of any of claims 1 to 4, wherein before the determining, by the first MLD, whether the link capability of the at least one requested link is compatible with the link common capability and/or whether the operational requirement of the at least one first affiliated STA is compatible with the link common operation, the method further comprises:
receiving, by the first MLD, STA information of at least one second affiliated STA, wherein the STA information of the at least one second affiliated STA indicates the link capability of the at least one requested link and/or the operational requirement of the at least one first affiliated STA, and wherein
the at least one second affiliated STA comprises a new affiliated STA of the second MLD and/or an affiliated STA of the second MLD for which no link is set up with the first MLD.

6. The method of claim 5, wherein the STA information of the at least one second affiliated STA is carried in a beacon frame or a probe response frame.

7. The method of any of claims 1 to 6, further comprising:
transmitting, by the first MLD, a first request frame to the second MLD and/or receiving, by the first MLD, a first response frame transmitted by the second MLD, when the link capability of the at least one requested link is compatible with the link common capability and/or the operational requirement of the at least one first affiliated STA is compatible with the link common operation, wherein
the first request frame is used for requesting to add the at least one requested link in multi-link reconfiguration, and the first response frame is used for adding the at least one requested link in multi-link reconfiguration.

8. The method of any of claims 1 to 6, further comprising:
determining, by the first MLD, not to transmit the first request frame to the second MLD, when the link capability of the at least one requested link is incompatible with the link common capability and/or the operational requirement of the at least one first affiliated STA is incompatible with the link common operation.

9. The method of any of claims 1 to 6, further comprising:
transmitting, by the first MLD, a first request frame to the second MLD and/or receiving, by the first MLD, a first response frame transmitted by the second MLD, when the first MLD fails to determine whether the link capability of the at least one requested link is compatible with the link common capability and/or whether the operational requirement of the at least one first affiliated STA is compatible with the link common operation, wherein
the first request frame is used for requesting to add the at least one requested link in multi-link reconfiguration, and the first request frame contains link capability information of the at least one requested link and/or operational information of the at least one first affiliated STA; and
the first response frame indicates failure of addition of a target requested link when the target requested link exists in the at least one requested link, and the target requested link is a requested link among the at least one requested link having a link capability incompatible with the link common capability and/or corresponding to at least one first affiliated STA having an operational requirement incompatible with the link common operation.

10. The method of any of claims 7 to 9, wherein transmitting, by the first MLD, the first request frame to the second MLD and/or receiving the first response frame transmitted by the second MLD comprises one of:
transmitting, by the first MLD, the first request frame and/or receiving, by the first MLD, the first response frame on one of the at least one setup link; or
transmitting, by the first MLD, the first request frame and/or receiving, by the first MLD, the first response frame on one of the at least one requested link.

11. The method of claims 7 to 10, wherein the first request frame comprises a first multi-link element, and the first multi-link element comprises:
a first common information field indicating information that is common to the at least one requested link and the at least one setup link; and/or
a first link information field indicating link information of the at least one requested link and/or link information of at least one first setup link, wherein the at least one first setup link is a link associated with the at least one requested link in the at least one setup link.

12. The method of claim 11, wherein the first common information field contains at least one of:
MLD medium access control (MAC) address information of the first MLD;
first common capability information indicating a capability that is common to the at least one setup link and the at least one requested link; or
first common operational information indicating an operation that is common to the at least one setup link and the at least one requested link.

13. The method of claim 12, wherein the first common capability information comprises at least one of:
an MLD capability of the first MLD;
an enhanced multi-link (EML) capability of the first MLD;
an RSN capability;
an RSNE capability;
an extended RSNE capability; or
an RSN extended element capability.

14. The method of any of claims 11 to 13, wherein the first link information field contains STA information of an affiliated STA of the first MLD associated with each of the at least one requested link and/or associated with each of the at least one first setup link.

15. The method of claim 14, wherein the STA information is carried in a first per-STA profile subelement, and the first per-STA profile subelement comprises at least one of:
a first subelement identity (ID) subfield indicating a subelement ID of the first per-STA profile subelement;
a first length subfield indicating a length of the first per-STA profile subelement;
a first STA control subfield indicating STA control information;
a first STA information subfield indicating STA information; or
a first STA profile subfield indicating STA profile information.

16. The method of claim 15, wherein the first STA control subfield comprises a link ID subfield, and the link ID subfield indicates an ID of a corresponding link for an affiliated STA of the second MLD.

17. The method of any of claims 11 to 16, wherein the first request frame further comprises a first transmitter STA information field, and the first transmitter STA information field indicates STA information of an affiliated STA of the first MLD associated with a link for transmitting the first request frame.

18. The method of any of claims 11 to 17, wherein when the first request frame is to be transmitted on a first requested link which is one of the at least one requested link, the first request frame further contains link capability information and/or an operational parameter of the first requested link, wherein
the link capability information indicates a link capability, and the operational parameter indicates operational information of a corresponding affiliated STA.

19. The method of claim 18, wherein the link capability information and/or the operational information of the first requested link is carried in at least one of:
a frame body of the first request frame; or
the first link information field in the first multi-link element.

20. The method of claim 18, wherein when the at least one requested link is multiple requested links, the first multi-link element comprises the first common information field and the first link information field, wherein
the first link information field comprises a first per-STA profile subelement of each second requested link;
the second requested link is a link other than the first requested link in the at least one requested link; and
for each second requested link, link capability information and/or an operational parameter of the second requested link is carried in a first per-STA profile subelement of the second requested link.

21. The method of any of claims 18 to 20, wherein the first request frame is a new-link association request frame, and the new-link association request frame is used for requesting to add the first requested link for transmitting the first request frame and/or the second requested link after completion of multi-link setup.

22. The method of any of claims 11 to 17, wherein when the first request frame is to be transmitted on one of the at least one setup link, the first multi-link element comprises the first common information field and the first link information field; and for each of the at least one requested link, link capability information and/or an operational parameter of the requested link is carried in a first per-STA profile subelement of the requested link in the first link information field.

23. The method of claim 22, wherein the first request frame is an addition request frame, and the addition request frame is used for requesting to add the at least one requested link after completion of multi-link setup.

24. The method of any of claims 18 to 23, wherein the link capability information of each of the at least one requested link comprises at least one of:
an RSN capability;
an RSNE capability;
an extended RSNE capability; or
an RSN extended element capability.

25. The method of claim 24, wherein in the at least one requested link, link capability information of different requested links is the same as common capability information of the at least one setup link, and/or operational parameters of different requested links are the same as common operational information of the at least one setup link.

26. The method of any of claims 18 to 25, wherein the first request frame further comprises:
an RSNE and/or an RSN extended element corresponding to each of the at least one requested link, wherein each RSNE contains at least part of capability information and/or an operational parameter of a requested link corresponding to the RSNE, and each RSN extended element contains at least part of capability information and/or an operational parameter of a requested link corresponding to the RSN extended element.

27. The method of any of claims 11 to 26, wherein
when the first MLD supports multi-link operation and the first MLD and the second MLD have completed multi-link setup, the first request frame comprises the first multi-link element;
when the first MLD supports multi-link operation but the first MLD and the second MLD have not completed multi-link setup, the first request frame comprises a basic multi-link element;
when the first MLD does not support multi-link operation, the first request frame does not comprise the first multi-link element and the basic multi-link element.

28. The method of any of claims 11 to 27, wherein the first multi-link element is a first addition reconfiguration multi-link element, and the first addition reconfiguration multi-link element is used for adding the at least one requested link after completion of multi-link setup.

29. The method of any of claims 7 to 28, wherein the first response frame comprises a second multi-link element, and the second multi-link element comprises:
a second common information field indicating information that is common to the at least one requested link and the at least one setup link; and/or
a second link information field indicating link information of the at least one requested link and/or link information of at least one first setup link, wherein the first setup link is a link associated with the at least one requested link in the at least one setup link.

30. The method of claim 29, wherein the second common information field comprises at least one of:
MLD MAC address information of the second MLD;
second common capability information indicating a capability common to the at least one setup link and the at least one requested link;
second common operational information indicating an operation common to the at least one setup link and the at least one requested link;
a basic service set (BSS) parameter change count subfield used for counting a critical update to a BSS parameter; or
a link ID indicating a link ID of a link for transmitting the first response frame.

31. The method of claim 30, wherein the second common capability information comprises at least one of:
an MLD capability of the second MLD;
an EML capability of the second MLD;
an RSN capability;
an RSNE capability;
an extended RSNE capability; or
an RSN extended element capability.

32. The method of any of claims 29 to 31, wherein the second link information field contains STA information of an affiliated STA of the second MLD associated with each of the at least one requested link and/or each of the at least one first setup link, wherein the first setup link is a link associated with the at least one requested link in the at least one setup link.

33. The method of claim 32, wherein the STA information is carried in a second per-STA profile subelement, and the second per-STA profile subelement comprises at least one of:
a second subelement ID subfield indicating a subelement ID of the second per-STA profile subelement;
a second length subfield indicating a length of the second per-STA profile subelement;
a second STA control subfield indicating STA control information;
a second STA information subfield indicating STA information; or
a second STA profile subfield indicating STA profile information.

34. The method of any of claims 29 to 33, wherein the first response frame further comprises a second transmitter STA information field, and the second transmitter STA information field indicates STA information of an affiliated STA of the second MLD associated with a link for transmitting the first response frame.

35. The method of any of claims 29 to 34, wherein when the first response frame is to be transmitted on a third requested link which is one of the at least one requested link, the first response frame further comprises a status code field, and the status code field indicates a setup result of the third requested link.

36. The method of claim 35, wherein
when the third requested link is accepted by the second MLD, the status code field indicates success of addition of the third requested link;
when the third requested link is rejected by the second MLD, the status code field indicates failure of link addition of the third requested link and/or a reason for the failure.

37. The method of claim 36, wherein when a link capability of the third requested link is incompatible with the link common capability and/or an operational requirement of a first affiliated STA corresponding to the third requested link is incompatible with the link common operation, the status code field indicates that the reason for the failure of the third requested link is: the link capability of the third requested link is incompatible with the link common capability and/or the operational requirement of the first affiliated STA corresponding to the third requested link is incompatible with the link common operation.

38. The method of any of claims 35 to 37, wherein the status code field of the third requested link is carried in at least one of:
a frame body of the first response frame; or
the second link information field in the second multi-link element.

39. The method of any of claims 35 to 37, wherein when the at least one requested link is multiple requested links, the second multi-link element comprises the second common information field and the second link information field, wherein
the second link information comprises a second per-STA profile subelement of each fourth requested link, and the fourth requested link is a requested link other than the third requested link in the at least one requested link; and
for each fourth requested link, a second per-STA profile subelement of the fourth requested link further comprises a status code subfield of the fourth requested link, and the status code subfield of the fourth requested link indicates a setup result of the corresponding fourth requested link.

40. The method of claim 39, wherein
a status code subfield of a fourth requested link accepted by the second MLD indicates success of link addition;
a status code subfield of a fourth requested link rejected by the second MLD indicates failure of link addition and/or a reason for the failure.

41. The method of claim 40, wherein when the link capability of the third requested link is incompatible with the link common capability and/or the operational requirement of the first affiliated STA corresponding to the third requested link is incompatible with the link common operation, the status code subfield of each fourth requested link indicates failure of link addition, and/or the status code subfield of each fourth requested link indicates that a reason for the failure is: setup failure of the third requested link.

42. The method of claim 35, wherein the first response frame is a new-link association response frame, and the new-link association response frame is used for at least one of the following:
adding or rejecting the third requested link for transmitting the first response frame in multi-link reconfiguration; or
adding or rejecting the fourth requested link in multi-link reconfiguration.

43. The method of any of claims 29 to 34, wherein when a link for transmitting the first response frame is one of the at least one setup link, the second multi-link element comprises the second common information field and the second link information field, and wherein
for each of the at least one requested link, a setup result of the requested link is indicated by a status code subfield in a second per-STA profile subelement of the requested link in the second link information field;
a status code subfield of a requested link accepted by the second MLD indicates success of link addition;
a status code subfield of a requested link rejected by the second MLD indicates failure of link addition and/or a reason for the failure.

44. The method of claim 43, wherein
for a requested link having a link capability incompatible with the link common capability and/or corresponding to a first affiliated STA having an operational requirement incompatible with the link common operation, a status code subfield of the requested link indicates failure of link addition and/or indicates that a reason for the failure is: the link capability is incompatible with the link common capability and/or the operational requirement of the first affiliated STA is incompatible with the link common operation.

45. The method of claim 43 or 44, wherein the first response frame is an addition response frame, and the addition response frame is used for adding or rejecting the at least one requested link after completion of multi-link setup.

46. The method of any of claims 7 to 45, wherein
when the second MLD supports multi-link operation and the second MLD and the first MLD have completed multi-link setup, the first response frame comprises the second multi-link element;
when the second MLD supports multi-link operation but the second MLD and the first MLD have not completed multi-link setup, the first response frame comprises a basic multi-link element;
when the second MLD does not support multi-link operation, the first response frame does not comprise the second multi-link element and the basic multi-link element.

47. The method of any of claims 29 to 46, wherein the second multi-link element is a second addition reconfiguration multi-link element, and the second addition reconfiguration multi-link element is used for adding the at least one requested link after completion of multi-link setup.

48. The method of any of claims 7 to 47, wherein a link for transmitting the first request frame is the same as a link for receiving the first response frame.

49. The method of any of claims 1 to 48, wherein
after adding at least one new link which is a link that is successfully set up among the at least one requested link and is some or all of the at least one requested link,
the method further comprises:
performing, by the first MLD, security authentication for the at least one new link and the at least one setup link or performing security authentication for the at least one new link with the second MLD.

50. The method of claim 49, wherein performing, by the first MLD, security authentication for the at least one new link and the at least one setup link or performing security authentication for the at least one new link with the second MLD comprises:
performing, by the first MLD, security authentication for the at least one new link and the at least one setup link with the second MLD when the first MLD is in a first state, wherein the first state indicates that security authentication of at least some of the at least one setup link is not completed.

51. The method of claim 50, wherein performing, by the first MLD, security authentication for the at least one new link and the at least one setup link or performing security authentication for the at least one new link with the second MLD comprises:
performing, by the first MLD, security authentication for the at least one new link with the second MLD when the first MLD is in a second state, wherein the second state indicates that security authentication of all the at least one setup link is completed.

52. The method of any of claims 49 to 41, wherein a first-part transmission parameter applied to the at least one new link is the same as a first-part parameter applied to the at least one setup link, and/or the at least one new link is re-setup by using a second-part parameter.

53. The method of claim 52, wherein the first-part parameter comprises at least one of: a pairwise transient key (PTK) or an association ID (AID).

54. The method of claim 52 or 53, wherein the second-part parameter comprises at least one of: a group temporal key (GTK), an integrity group temporal key (IGTK), or a beacon integrity group temporal key (BIGTK).

55. The method of any of claims 49 to 54, wherein performing, by the first MLD, security authentication for the at least one new link with the second MLD comprises:
exchanging, by the first MLD, a handshake message with the second MLD, wherein the exchange of the handshake message is used for generating a second-part transmission parameter for the at least one new link.

56. The method of claim 55, wherein the handshake message comprises 4-way handshake messages, and exchanging, by the first MLD, the handshake message with the second MLD comprises:
receiving, by the first MLD, a first handshake message transmitted by the second MLD, wherein the first handshake message is used for confirming whether the first-part transmission parameter is applied to the at least one new link;
transmitting, by the first MLD, a second handshake message to the second MLD, wherein the second handshake message is used for synchronizing or confirming the first-part transmission parameter applied to the at least one new link;
receiving, by the first MLD, a third handshake message transmitted by the second MLD, wherein the third handshake message indicates a second-part transmission parameter applied to each of the at least one new link; and
transmitting, by the first MLD, a fourth handshake message to the second MLD, wherein the fourth handshake message is used for confirming a second-part transmission parameter applied to each new link that is successfully set up.

57. The method of claim 56, wherein the first handshake message and the second handshake message do not contain a nonce for generating the first-part transmission parameter.

58. The method of claim 56 or 57, wherein the second handshake message contains link information of each of the at least one new link.

59. The method of any of claims 56 to 58, wherein the third handshake message contains at least one of:
the link information of each of the at least one new link;
a GTK of each new link;
an IGTK of each new link; or
a BIGTK of each new link.

60. The method of claim 55, wherein the handshake message comprises two group handshake messages, and exchanging, by the first MLD, the handshake message with the second MLD comprises:
receiving, by the first MLD, a first group handshake message transmitted by the second MLD, wherein the first group handshake message indicates a second-part transmission parameter applied to each of the at least one new link; and
transmitting, by the first MLD, a second group handshake message to the second MLD, wherein the second group handshake message is used for confirming a second-part transmission parameter applied to each new link that is successfully set up.

61. The method of any of claims 1 to 60, wherein
the at least one requested link and the at least one setup link are located on different nonoverlapping channels, different requested links use different nonoverlapping channels, and different setup links use different nonoverlapping channels.

62. The method of any of claims 1 to 61, wherein
the first MLD is a non-access point (AP) MLD; and
the second MLD is a non-AP MLD or an AP MLD.

63. A method for multi-link reconfiguration, comprising:
receiving, by a second multi-link device (MLD), a first request frame transmitted by a first MLD and/or transmitting, by the second MLD, a first response frame to the first MLD, wherein the first request frame is used for requesting to add at least one requested link in multi-link reconfiguration, and the first response frame is used for adding the at least one requested link in multi-link reconfiguration.

64. The method of claim 63, wherein the first request frame contains link capability information of the at least one requested link and/or operational information of at least one first affiliated station (STA), and the at least one first affiliated STA is an affiliated STA of the first MLD associated with the at least one requested link.

65. The method of claim 64, wherein
determining, by the second MLD, whether a link capability of the at least one requested link is compatible with a link common capability and/or whether an operational requirement of the at least one first affiliated STA is compatible with a link common operation, wherein the link capability of the at least one requested link is determined according to the link capability information of the at least one requested link, and/or the operational requirement of the at least one first affiliated STA is determined according to the operational information of the at least one first affiliated STA.

66. The method of claim 65, wherein the link common capability comprises at least one of:
a robust security network (RSN) capability common to at least one setup link;
a robust security network element (RSNE) capability common to the at least one setup link;
an extended RSNE capability common to the at least one setup link; or
an RSN extended element capability common to the at least one setup link.

67. The method of claim 65 or 66, wherein the link common operation is indicated by at least one of:
an authentication and key management (AKM) suite selector common to at least one setup link; or
a pairwise cipher suite common to the at least one setup link.

68. The method of any of claims 65 to 67, wherein the first response frame indicates failure of addition of a target requested link when the target requested link exists in the at least one requested link, and the target requested link is a requested link among the at least one requested link having a link capability incompatible with the link common capability and/or corresponding to at least one first affiliated STA having an operational requirement incompatible with the link common operation.

69. The method of any of claims 63 to 68, wherein before receiving, by the second MLD, the first request frame transmitted by a first MLD and/or transmitting, by the second MLD, the first response frame to the first MLD, the method further comprises:
transmitting, by the second MLD, STA information of at least one second affiliated STA to the first MLD, wherein the STA information of the at least one second affiliated STA indicates the link capability of the at least one requested link and/or the operational requirement of the at least one first affiliated STA, and wherein
the at least one second affiliated STA comprises a new affiliated STA of the second MLD and/or an affiliated STA of the second MLD for which no link is set up with the first MLD.

70. The method of claim 69, wherein the STA information of the at least one second affiliated STA is carried in a beacon frame or a probe response frame.

71. The method of any of claims 63 to 70, wherein receiving, by the second MLD, the first request frame transmitted by the first MLD and/or transmitting, by the second MLD, the first response frame to the first MLD comprises:
receiving, by the second MLD, the first request frame and/or transmitting, by the second MLD, the first response frame on one of the at least one setup link; or
receiving, by the second MLD, the first request frame and/or transmitting, by the second MLD, the first response frame on one of the at least one requested link.

72. The method of claims 63 to 71, wherein the first request frame comprises a first multi-link element, and the first multi-link element comprises:
a first common information field indicating information that is common to the at least one requested link and the at least one setup link; and/or
a first link information field indicating link information of the at least one requested link and/or link information of at least one first setup link, wherein the at least one first setup link is a link associated with the at least one requested link in the at least one setup link.

73. The method of claim 72, wherein the first common information field contains at least one of:
MLD medium access control (MAC) address information of the first MLD;
first common capability information indicating a capability that is common to the at least one setup link and the at least one requested link; or
first common operational information indicating an operation that is common to the at least one setup link and the at least one requested link.

74. The method of claim 73, wherein the first common capability information comprises at least one of:
an MLD capability of the first MLD;
an enhanced multi-link (EML) capability of the first MLD;
an RSN capability;
an RSNE capability;
an extended RSNE capability; or
an RSN extended element capability.

75. The method of any of claims 72 to 74, wherein the first link information field contains STA information of an affiliated STA of the first MLD associated with each of the at least one requested link and/or each of the at least one first setup link.

76. The method of claim 75, wherein the STA information is carried in a first per-STA profile subelement, and the first per-STA profile subelement comprises at least one of:
a first subelement identity (ID) subfield indicating a subelement ID of the first per-STA profile subelement;
a first length subfield indicating a length of the first per-STA profile subelement;
a first STA control subfield indicating STA control information;
a first STA information subfield indicating STA information; or
a first STA profile subfield indicating STA profile information.

77. The method of claim 76, wherein the first STA control subfield comprises a link ID subfield, and the link ID subfield indicates an ID of a corresponding link for an affiliated STA of the second MLD.

78. The method of any of claims 72 to 77, wherein the first request frame further comprises a first transmitter STA information field, and the first transmitter STA information field indicates STA information of an affiliated STA of the first MLD associated with a link for transmitting the first request frame.

79. The method of any of claims 71 to 78, wherein when the first request frame is to be transmitted on a first requested link which is one of the at least one requested link, the first request frame further contains link capability information and/or an operational parameter of the first requested link, wherein
the link capability information indicates a link capability, and the operational parameter indicates operational information of a corresponding affiliated STA.

80. The method of claim 79, wherein, the link capability information and/or the operational information of the first requested link is carried in at least one of:
a frame body of the first request frame; or
the first link information field in the first multi-link element.

81. The method of claim 79, wherein when the at least one requested link is multiple requested links, the first multi-link element comprises the first common information field and the first link information field, wherein
the first link information field comprises a first per-STA profile subelement of each second requested link;
the second requested link is a link other than the first requested link in the at least one requested link; and
for each second requested link, link capability information and/or an operational parameter of the second requested link is carried in a first per-STA profile subelement of the second requested link.

82. The method of any of claims 63 to 81, wherein the first request frame is a new-link association request frame, and the new-link association request frame is used for requesting to add the first requested link for transmitting the first request frame and/or the second requested link after completion of multi-link setup.

83. The method of any of claims 71 to 78, wherein when the first request frame is to be transmitted on one of the at least one setup link, the first multi-link element comprises the first common information field and the first link information field; and for each of the at least one requested link, link capability information and/or an operational parameter of the requested link is carried in a first per-STA profile subelement of the requested link in the first link information field.

84. The method of claim 83, wherein the first request frame is an addition request frame, and the addition request frame is used for requesting to add the at least one requested link after completion of multi-link setup.

85. The method of any of claims 79 to 84, wherein the link capability information of each of the at least one requested link comprises at least one of:
an RSN capability;
an RSNE capability;
an extended RSNE capability; or
an RSN extended element capability.

86. The method of claim 85, wherein in the at least one requested link, link capability information of different requested links is the same as common capability information of the at least one setup link, and/or operational parameters of different requested links are the same as common operational information of the at least one setup link.

87. The method of any of claims 79 to 86, wherein the first request frame further comprises:
an RSNE and/or an RSN extended element corresponding to each of the at least one requested link, wherein each RSNE contains at least part of capability information and/or an operational parameter of a requested link corresponding to the RSNE, and each RSN extended element contains at least part of capability information and/or an operational parameter of a requested link corresponding to the RSN extended element.

88. The method of any of claims 72 to 87, wherein
when the first MLD supports multi-link operation and the first MLD and the second MLD have completed multi-link setup, the first request frame comprises the first multi-link element;
when the first MLD supports multi-link operation but the first MLD and the second MLD have not completed multi-link setup, the first request frame comprises a basic multi-link element;
when the first MLD does not support multi-link operation, the first request frame does not comprise the first multi-link element and the basic multi-link element.

89. The method of any of claims 72 to 88, wherein the first multi-link element is a first addition reconfiguration multi-link element, and the first addition reconfiguration multi-link element is used for adding the at least one requested link after completion of multi-link setup.

90. The method of any of claims 63 to 89, wherein the first response frame comprises a second multi-link element, and the second multi-link element comprises:
a second common information field indicating information that is common to the at least one requested link and the at least one setup link; and/or
a second link information field indicating link information of the at least one requested link and/or link information of at least one first setup link, wherein the first setup link is a link associated with the at least one requested link in the at least one setup link.

91. The method of claim 90, wherein the second common information field comprises at least one of:
MLD MAC address information of the second MLD;
second common capability information indicating a capability common to the at least one setup link and the at least one requested link;
second common operational information indicating an operation common to the at least one setup link and the at least one requested link;
a basic service set (BSS) parameter change count subfield used for counting a critical update to a BSS parameter; or
a link ID indicating a link ID of a link for transmitting the first response frame.

92. The method of claim 91, wherein the second common capability information comprises at least one of:
an MLD capability of the second MLD;
an EML capability of the second MLD;
an RSN capability;
an RSNE capability;
an extended RSNE capability; or
an RSN extended element capability.

93. The method of any of claims 90 to 92, wherein the second link information field contains STA information of an affiliated STA of the second MLD associated with each of the at least one requested link and/or each of the at least one first setup link, wherein the first setup link is a link associated with the at least one requested link in the at least one setup link.

94. The method of claim 93, wherein the STA information is carried in a second per-STA profile subelement, and the second per-STA profile subelement comprises at least one of:
a second subelement ID subfield indicating a subelement ID of the second per-STA profile subelement;
a second length subfield indicating a length of the second per-STA profile subelement;
a second STA control subfield indicating STA control information;
a second STA information subfield indicating STA information; or
a second STA profile subfield indicating STA profile information.

95. The method of any of claims 63 to 94, wherein the first response frame further comprises a second transmitter STA information field, and the second transmitter STA information field indicates STA information of an affiliated STA of the second MLD associated with a link for transmitting the first response frame.

96. The method of any of claims 63 to 95, wherein when the first response frame is to be transmitted on a third requested link which is one of the at least one requested link, the first response frame further comprises a status code field, and the status code field indicates a setup result of the third requested link.

97. The method of claim 96, wherein
when the third requested link is accepted by the second MLD, the status code field indicates success of addition of the third requested link;
when the third requested link is rejected by the second MLD, the status code field indicates failure of link addition of the third requested link and/or a reason for the failure.

98. The method of claim 97, wherein when a link capability of the third requested link is incompatible with the link common capability and/or an operational requirement of a first affiliated STA corresponding to the third requested link is incompatible with the link common operation, the status code field indicates that the reason for the failure of the third requested link is: the link capability of the third requested link is incompatible with the link common capability and/or the operational requirement of the first affiliated STA corresponding to the third requested link is incompatible with the link common operation.

99. The method of any of claims 96 to 98, wherein the status code field of the third requested link is carried in at least one of:
a frame body of the first response frame; or
the second link information field in the second multi-link element.

100. The method of any of claims 90 to 99, wherein when the at least one requested link is multiple requested links, the second multi-link element comprises the second common information field and the second link information field, wherein
the second link information comprises a second per-STA profile subelement of each fourth requested link, and the fourth requested link is a requested link other than the third requested link in the at least one requested link; and
for each fourth requested link, a second per-STA profile subelement of the fourth requested link further comprises a status code subfield of the fourth requested link, and the status code subfield of the fourth requested link indicates a setup result of the corresponding fourth requested link.

101. The method of claim 100, wherein
a status code subfield of a fourth requested link accepted by the second MLD indicates success of link addition;
a status code subfield of a fourth requested link rejected by the second MLD indicates failure of link addition and/or a reason for the failure.

102. The method of claim 101, wherein when the link capability of the third requested link is incompatible with the link common capability and/or the operational requirement of the first affiliated STA corresponding to the third requested link is incompatible with the link common operation, the status code subfield of each fourth requested link indicates failure of link addition, and/or the status code subfield of each fourth requested link indicates that a reason for the failure is: setup failure of the third requested link.

103. The method of any of claims 96 to 103, wherein the first response frame is a new-link association response frame, and the new-link association response frame is used for at least one of the following:
adding or rejecting the third requested link for transmitting the first response frame in multi-link reconfiguration; or
adding or rejecting the fourth requested link in multi-link reconfiguration.

104. The method of any of claims 63 to 95, wherein when a link for transmitting the first response frame is one of the at least one setup link, the second multi-link element comprises the second common information field and the second link information field, and wherein
for each of the at least one requested link, a setup result of the requested link is indicated by a status code subfield in a second per-STA profile subelement of the requested link in the second link information field;
a status code subfield of a requested link accepted by the second MLD indicates success of link addition;
a status code subfield of a requested link rejected by the second MLD indicates failure of link addition and/or a reason for the failure.

105. The method of claim 104, wherein
for a requested link having a link capability incompatible with the link common capability and/or corresponding to a first affiliated STA having an operational requirement incompatible with the link common operation, a status code subfield of the requested link indicates failure of link addition and/or indicates that a reason for the failure is: the link capability is incompatible with the link common capability and/or the operational requirement of the first affiliated STA is incompatible with the link common operation.

106. The method of claim 104 or 105, wherein the first response frame is an addition response frame, and the addition response frame is used for adding or rejecting the at least one requested link after completion of multi-link setup.

107. The method of any of claims 90 to 106, wherein
when the second MLD supports multi-link operation and the second MLD and the first MLD have completed multi-link setup, the first response frame comprises the second multi-link element;
when the second MLD supports multi-link operation but the second MLD and the first MLD have not completed multi-link setup, the first response frame comprises a basic multi-link element;
when the second MLD does not support multi-link operation, the first response frame does not comprise the second multi-link element and the basic multi-link element.

108. The method of any of claims 90 to 107, wherein the second multi-link element is a second addition reconfiguration multi-link element, and the second addition reconfiguration multi-link element is used for adding the at least one requested link after completion of multi-link setup.

109. The method of any of claims 63 to 109, wherein a link for transmitting the first request frame is the same as a link for receiving the first response frame.

110. The method of any of claims 63 to 109, wherein
after adding at least one new link which is a link that is successfully set up among the at least one requested link and is some or all of the at least one requested link,
the method further comprises:
performing, by the second MLD, security authentication for the at least one new link and the at least one setup link or performing security authentication for the at least one new link with the first MLD.

111. The method of claim 110, wherein performing, by the second MLD, security authentication for the at least one new link and the at least one setup link or performing security authentication for the at least one new link and the first MLD comprises:
performing, by the second MLD, security authentication for the at least one new link and the at least one setup link with the first MLD when the first MLD is in a first state, wherein the first state indicates that security authentication of at least some of the at least one setup link is not completed.

112. The method of claim 110, wherein performing, by the second MLD, security authentication for the at least one new link and the at least one setup link or performing security authentication for the at least one new link and the first MLD comprises:
performing, by the second MLD, security authentication for the at least one new link with the first MLD when the first MLD is in a second state, wherein the second state indicates that security authentication of all the at least one setup link is completed.

113. The method of any of claims 110 to 113, wherein a first-part transmission parameter applied to the at least one new link is the same as a first-part parameter applied to the at least one setup link, and/or the at least one new link is re-setup by using a second-part parameter.

114. The method of claim 113, wherein the first-part parameter comprises at least one of: a pairwise transient key (PTK) or an association ID (AID).

115. The method of claim 113 or 114, wherein the second-part parameter comprises at least one of: a group temporal key (GTK), an integrity group temporal key (IGTK), or a beacon integrity group temporal key (BIGTK).

116. The method of any of claims 110 to 115, wherein performing, by the second MLD, security authentication for the at least one new link with the first MLD comprises:
exchanging, by the second MLD, a handshake message with the first MLD, wherein the exchange of the handshake message is used for generating a second-part transmission parameter for the at least one new link.

117. The method of claim 116, wherein the handshake message comprises 4-way handshake messages, and exchanging, by the second MLD, the handshake message with the first MLD comprises:
transmitting, by the second MLD, a first handshake message to the first MLD, wherein the first handshake message is used for confirming whether the first-part transmission parameter is applied to the at least one new link;
receiving, by the second MLD, a second handshake message transmitted by the first MLD, wherein the second handshake message is used for synchronizing or confirming the first-part transmission parameter applied to the at least one new link;
transmitting, by the second MLD, a third handshake message to the first MLD, wherein the third handshake message indicates a second-part transmission parameter applied to each of the at least one new link; and
receiving, by the second MLD, a fourth handshake message transmitted by the first MLD, wherein the fourth handshake message is used for confirming a second-part transmission parameter applied to each new link that is successfully set up.

118. The method of claim 117, wherein the first handshake message and the second handshake message do not contain a nonce for generating the first-part transmission parameter.

119. The method of claim 117 or 118, wherein the second handshake message contains link information of each of the at least one new link.

120. The method of any of claims 117 to 119, wherein the third handshake message contains at least one of:
the link information of each of the at least one new link;
a GTK of each new link;
an IGTK of each new link; or
a BIGTK of each new link.

121. The method of claim 116, wherein the handshake message comprises two group handshake messages, and exchanging, by the second MLD, the handshake message with the first MLD comprises:
transmitting, by the second MLD, a first group handshake message to the first MLD, wherein the first group handshake message indicates a second-part transmission parameter applied to each of the at least one new link; and
receiving, by the second MLD, a second group handshake message transmitted by the first MLD, wherein the second group handshake message is used for confirming a second-part transmission parameter applied to each new link that is successfully set up.

122. The method of any of claims 63 to 121, wherein
the at least one requested link and the at least one setup link use different nonoverlapping channels, different requested links use different nonoverlapping channels, and different setup links use different nonoverlapping channels.

123. The method of any of claims 1 to 122, wherein
the first MLD is a non-access point (AP) MLD; and
the second MLD is a non-AP MLD or an AP MLD.

124. An apparatus for multi-link reconfiguration, applied to a first multi-link device (MLD) and comprising:
a first determining unit configured for the first MLD to determine whether a link capability of at least one requested link is compatible with a link common capability and/or whether an operational requirement of at least one first affiliated station (STA) is compatible with a link common operation, when the first MLD and a second MLD have completed multi-link setup and set up at least one setup link, wherein
the at least one first affiliated STA is an affiliated STA of the first MLD associated with the at least one requested link, the link common capability refers to a capability common to the at least one setup link, and the link common operation refers to an operation common to the at least one setup link.

125. An apparatus for multi-link reconfiguration, applied to a second multi-link device (MLD) and comprising:
a second transceiver unit configured to receive a first request frame transmitted by a first MLD and/or transmit a first response frame to the first MLD, wherein the first request frame is used for requesting to add at least one requested link in multi-link reconfiguration, and the first response frame is used for adding the at least one requested link in multi-link reconfiguration.

126. A communication device, comprising:
a memory configured to store computer programs; and
a processor configured to invoke and execute the computer programs stored in the memory, to implement the method of any of claims 1 to 62 or the method of any of claims 63 to 123.

127. A chip, comprising:
a processor configured to invoke and execute computer programs from a memory, to cause a device equipped with the chip to implement the method of any of claims 1 to 62 or the method of any of claims 63 to 123.

128. A computer-readable storage medium, configured to store computer programs which are operable with a computer to implement the method of any of claims 1 to 62 or the method of any of claims 63 to 123.

129. A computer program product, comprising computer program instructions which are operable with a computer to implement the method of any of claims 1 to 62 or the method of any of claims 63 to 123.

130. A computer program, operable with a computer to implement the method of any one of claims 1 to 62 or the method of any one of claims 63 to 123.
